# EUROPÄISCHE PATENTANMELDUNG

(11) **EP 3 466 772 A1**
(43) Veröffentlichungstag der Anmeldung: **10.04.2019**
(21) Anmeldenummer: 18198576.3
(22) Anmeldetag: 04.10.2018
(51) Int. Cl.: B60R 25/20

(54) **MONTAGEMODUL MIT EINEM ANZEIGEELEMENT**

(30) Priorität: 04.10.2017 DE 102017123017
(71) Anmelder: Huf Hülsbeck & Fürst GmbH & Co. KG, 42551 Velbert (DE)
(72) Erfinder: Venema, Boudewijn, 57413 Finnentrop-Heggen (DE)
(74) Vertreter: Patentanwälte Bals & Vogel

(57) **Zusammenfassung**

Die Erfindung betrifft ein Montagemodul (20) für ein Kraftfahrzeug, mit einem optischen Sensorsystem (30), das geeignet ist, einen außerhalb des Kraftfahrzeugs (1) liegenden Detektionsbereich (21) zu überwachen, um eine Nähe eines Benutzers (10) festzustellen, und im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen.

Das Anzeigeelement (43) des Montagemoduls macht einen Betätigungsbereich (22,28) auf der Bodenfläche sichtbar.

## Beschreibung

Die Erfindung betrifft ein Montagemodul für ein Kraftfahrzeug mit einem optischen Sensorsystem gemäß dem Patentanspruch 1. Ferner betrifft die Erfindung ein Verfahren zum Auslösen mindestens eines Signals für ein Kraftfahrzeug gemäß dem unabhängigen Anspruch 25.

Die DE 10 2008 021 989 A1 offenbart eine Lichtquelle, durch die ein für den Benutzer sichtbares Bedienfeld ausgebildet wird. Das Bedienfeld ist auf einen geringen Teilbereich einer Bodenfläche, der in etwa einer Größe zweier Schuhabdrücke entspricht, begrenzt. Das Bedienfeld wird ausgebildet, wenn eine Personenannäherung durch einen nicht näher genannten Sensor detektiert worden ist. Der Benutzer kann das Bedienfeld mit einem Fuß bewusst berühren und damit eine Authentifizierungsüberprüfung zu einer Zugangsberechtigung starten.

Nachteilig hieran ist, dass zunächst eine Personenannäherung mit einem weiteren Sensor detektiert werden muss, bevor die Authentifizierungsüberprüfung gestartet wird. Zudem muss der Benutzer zum Starten der Authentifizierungsüberprüfung bereits nahe dem Kraftfahrzeug sein und bewusst ein sichtbares Bedienfeld betreten. Somit muss der Benutzer aktiv werden, um die Authentifizierungsüberprüfung zu starten. Dieses ist für den Benutzer zeitaufwändig.

Ferner ist bekannt, eine Authentifizierungsüberprüfung durch einen kapazitiven Sensor zu starten. Hierzu muss der Benutzer aber bereits eine Öffnungsbewegung ausführen, z. B. in einen Türgriff eines Kraftfahrzeuges greifen.

Es ist daher die Aufgabe der vorliegenden Erfindung, ein Montagemodul für ein Kraftfahrzeug und ein Verfahren zum Auslösen zumindest eines Signals für ein Kraftfahrzeug bereitzustellen, das zumindest einen der vorgenannten Nachteile beseitigt, insbesondere ermöglicht, dass eine Authentifizierungsüberprüfung unbemerkt und/oder frühzeitig für den Benutzer und/oder gezielt für einen sich nähernden Benutzer gestartet wird.

Zur Lösung der Aufgabe wird ein Montagemodul mit sämtlichen Merkmalen des Anspruches 1 vorgeschlagen. Vorteilhafte Weiterbildungen des Montagemoduls sind in den abhängigen Vorrichtungsansprüchen angegeben. Die Aufgabe wird weiterhin gelöst durch ein Verfahren gemäß dem unabhängigen Anspruch 25. Eine vorteilhafte Weiterbildung ist dem abhängigen Verfahrensanspruch angegeben. Ferner wird ein Authentifizierungssystem mit einem erfindungsgemäßen Montagemodul, einem ID-Geber und einem Zugangskontrollsystem im Anspruch 24 unter Schutz gestellt. Merkmale und Details, die im Zusammenhang mit dem erfindungsgemäßen Montagemodul und/oder Authentifizierungssystem beschrieben sind, gelten dabei auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein. Zusätzlich wird ein Kraftfahrzeug mit einem erfindungsgemäßen Montagemodul und/oder mit einem erfindungsgemäßen Authentifizierungssystem unter Schutz gestellt.

Erfindungsgemäß weist das Montagemodul ein optisches Sensorsystem auf, das geeignet ist,
a) einen außerhalb des Kraftfahrzeugs liegenden Detektionsbereich zu überwachen, um eine Nähe eines Benutzers festzustellen,
b) im Falle eines Erkennens des Benutzers im Detektionsbereich ein Signal für den Start einer Authentifizierungsüberprüfung zwischen einem ID-Geber und einem Zugangskontrollsystem des Kraftfahrzeuges auszulösen.

Erfindungswesentlich ist zum einen, dass durch das optische Sensorsystem bereits eine Nähe eines Benutzers festgestellt werden kann. Hierdurch muss kein weiterer Sensor vorhanden sein, der eine Annäherung eines Benutzers feststellt. Die Nähe des Benutzers wird durch das Erkennen des Benutzers im Detektionsbereich festgestellt. Es ist aber denkbar, dass weitere Anforderungen an das Erkennen des Benutzers im Detektionsbereich erfüllt sein müssen, bevor ein Signal für den Start der Authentifizierungsüberprüfung ausgelöst wird. Bei der Nähe eines Benutzers handelt es sich um die Nähe zum optischen Sensorsystem und/oder zum Kraftfahrzeug. Schritt b) erfolgt insbesondere nach Schritt a).

Erfindungswesentlich ist weiterhin, dass ein optisches Sensorsystem den Detektionsbereich überwacht. Durch den Einsatz eines optischen Sensorsystems kann das Erkennen eines Benutzers auf den vorgegebenen, als Raumabschnitt abgrenzbaren Detektionsbereich außerhalb des Kraftfahrzeuges festgelegt sein. Die Größe und Form des Detektionsbereichs ergeben sich aus dem Aufbau des optischen Sensorsystems. Hierbei ist z. B. möglich, den Detektionsbereich so festzulegen, dass der Benutzer vor Einleitung einer Öffnungsbewegung im Detektionsbereich erkannt wird. Der Benutzer kann somit frühzeitiger als bei Verwendung eines kapazitiven Sensors erkannt werden. Andererseits ist es möglich, den Detektionsbereich auf einen vorgegebenen Raumabschnitt zu beschränken, was z. B. bei einer Verwendung eines Hochfrequenzsignales zum Erkennen eines Benutzers nicht möglich wäre. Somit können nur Benutzer, die sich nahe dem optischen Sensorsystems befinden, erkannt werden. Somit kann durch den durch das optische Sensorsystem festgelegten Detektionsbereich ein Benutzer zum einen frühzeitig und zum anderen gezielt erkannt werden.

Dadurch, dass der Detektionsbereich überwacht wird und im Falle eines Erkennens des Benutzers im Detektionsbereich die Authentifizierungsüberprüfung gestartet wird, ist insbesondere keine aktive Handlung eines Benutzers notwendig, um den Start einer Authentifizierungsüberprüfung vorzunehmen. Vielmehr wird vorzugsweise von dem Benutzer unbemerkt der Start der Authentifizierungsüberprüfung eingeleitet. Somit kann vorgesehen sein, dass das optische Sensorsystem eine Passive-Keyless-Entry-Überprüfung einleitet. Unter einer Passive-Keyless-Entry-Überprüfung wird ein Verfahren verstanden, bei dem unbemerkt durch den Benutzer eine Authentifizierungsüberprüfung stattfindet. Die Authentifizierungsüberprüfung bei einer Passive-Keyless-Entry-Überprüfung muss der Benutzer nicht durch eine bewusste Handlung, z. B. Bedienen des ID-Gebers, einleiten.

Das Montagemodul kann z. B. dazu ausgebildet sein, so eingebaut zu werden, dass sich der Detektionsbereich zumindest teilweise oberhalb einer Bodenfläche, auf der das Kraftfahrzeug steht, befindet. Hierdurch ist der Detektionsbereich nicht nur auf einen geringen Teilbereich einer Bodenfläche vor einem Kraftfahrzeug beschränkt. Es kann sein, dass der Detektionsbereich in Kraftfahrzeugnähe oberhalb der Bodenfläche beginnt und dann schräg bis zu Erreichen der Bodenfläche verläuft. Hierbei endet der Detektionsbereich an der Bodenfläche. Alternativ kann der Detektionsbereich zumindest teilweise oberhalb der Bodenfläche enden. In einer besonderen Ausführungsform befindet sich der Detektionsbereich vollständig oberhalb der Bodenfläche. Ein Ende des Detektionsbereichs kann sich in diesem Fall durch eine zu geringe Lichtintensität, mit der der Detektionsbereich beleuchtet wird, in einer gewissen Entfernung zum optischen Sensorsystem ergeben.

Vorzugsweise kann sich in einer Draufsicht der Detektionsbereich zum optischen Sensorsystem hin verkleinern. Hierdurch werden gezielt nur Benutzer erkannt, die sich voraussichtlich dem optischen Sensorsystem und/oder dem Kraftfahrzeug annähern werden. Bevorzugt ist der Detektionsbereich achsensymmetrisch ausgebildet. Insbesondere kann die Symmetrieachse des Detektionsbereichs im Wesentlichen parallel zu einer optischen Achse des optischen Sensorsystems und/oder orthogonal zu einer Oberfläche des Kraftfahrzeuges ausgebildet sein. Hierdurch werden verschiedene Bewegungsrichtungen des Benutzers gleichermaßen erfasst. Der Detektionsbereich beginnt vorzugsweise in einem Abstand y vom optischen Sensorsystem mit 0 cm ≤ y ≤ 15 cm.

Es kann vorgesehen sein, dass das optische Sensorsystem oder das gesamte Montagemodul zur Anordnung am Fahrzeugheck, z. B. hinter der Heckscheibe, in eine Griffleiste,in ein Emblem, in eine Rückleuchte, hinter ein Katzenauge, an einen Stoßfänger und/oder in einem Spalt zwischen zwei Komponenten, ausgebildet ist. Alternativ oder zusätzlich kann das Montagemodul geeignet sein, an einer Fahrzeugseite z. B. in einer B-Säule befestigt zu werden. Hierdurch können unterschiedliche Detektionsbereiche, in denen sich üblicher Weise ein Benutzer dem Kraftfahrzeug annähert, mit dem optischen Sensorsystem überwacht werden. Insbesondere kann das optische Sensorsystem oder das gesamte Montagemodul hinter einer von außen undurchsichtigen Schicht verdeckt sein, die jedoch für das Licht des optischen Sensorsystems lichtdurchlässig ist. So kann z. B. der Stoßfänger, an dem das optische Sensorsystem montiert ist, lackiert sein.

Das optische Sensorsystem kann einen optischen Sensor aufweisen. Der optische Sensor kann ausgebildet sein, Licht aus dem Detektionsbereich zu empfangen. Der optische Sensor nimmt Bilder des Detektionsbereichs auf. Hierzu kann der optische Sensor ein Linsensystem aufweisen. Jedes Bild kann insbesondere aus einer Gesamtzahl von Pixeln zusammengesetzt sein. Der optische Sensor kann einen Bildsensor aufweisen, der die Gesamtzahl der Pixel aufweist. Der Bildsensor kann ein CMOS-Sensor und/oder ein LDPD-Sensor sein. Der LDPD-Sensor (Lateral Drift Field Photodetector) ist in der Druckschrift DE 10 2009 020 218 B3 beschrieben. Der LDPD-Sensor ist geeignet, besonders schnell ausgewertet zu werden.

Das optische Sensorsystem kann ein Lichtmodul zum Emittieren von Licht aufweisen. Das Licht dient dazu, den Detektionsbereich entstehen zu lassen. Hierzu kann das Lichtmodul ein Linsensystem aufweisen. Es kann vorgesehen sein, dass der Detektionsbereich für den Benutzer unsichtbar ist. Hierzu emittiert das Lichtmodul Licht im nicht sichtbaren Bereich. Insbesondere kann es sich bei dem Licht um Infrarotstrahlen, insbesondere um nahe Infrarotstrahlen, handeln. Das Lichtmodul kann nur eine Lichtquelle aufweisen. Alternativ kann das Lichtmodul mehrere Lichtquellen aufweisen. Die Lichtquellen können um den optischen Sensor angeordnet sein. So können z. B. Lichtquellen links und rechts von dem optischen Sensor angeordnet sein. Alternativ können die Lichtquellen um den Umfang des optischen Sensors herum angeordnet sein. Bei dem Licht kann es sich um Laserlicht handeln.

Insbesondere kann der Detektionsbereich durch die Überlagerung von einem Sendebereich des Lichtmoduls und einem Empfangsbereich des optischen Sensors gebildet sein. Bevorzugt ist der Detektionsbereich durch die gesamte Überlagerung des Sendebereichs mit dem Empfangsbereich ausgebildet. Der Sendebereich des Lichtmoduls ergibt sich aus dem Bereich, in dem das Lichtmodul Licht von ausreichender Intensität emittiert. Der Empfangsbereich ergibt sich aus dem Bereich, aus dem der optische Sensor Licht empfangen kann. Der Sendebereich des Lichtmoduls kann aus den Sendebereichen der einzelnen Lichtquellen zusammengesetzt sein. Alternativ kann der Sendebereich auf die Überlagerung der Sendebereiche der einzelnen Lichtquellen beschränkt sein. Der Empfangsbereich und/oder der Sendebereich jeder Lichtquelle kann einen kegelstumpfförmigen Bereich aufweisen. Hierbei kann die Spitze des kegelstumpfförmigen Bereichs am optischen Sensor bzw. an der Lichtquelle angeordnet sein. Vorzugsweise weist der Detektionsbereich einen kegelstumpfförmigen Bereich auf. Die jeweiligen Kegelstümpfe können eine runde oder elliptische Grundfläche aufweisen. Der kegelstumpfförmige Bereich des Detektionsbereich kann insbesondere einem schrägen Kegelstumpf entsprechen.

Das optische Sensorsystem kann ferner eine Überwachungseinheit zum Auswerten des optischen Sensors aufweisen. Die Überwachungseinheit kann dazu ausgebildet sein, Bilder auszuwerten, die vom optischen Sensor aufgenommen worden sind. Hierbei kann es sich um Bilder des Detektionsbereichs handeln.

Es kann vorgesehen sein, dass der optische Sensor einen Infrarotfilter und/oder einen Polarisationsfilter aufweist. Hierdurch kann zumindest ein Teil eines Störlichtes herausgefiltert werden. Bei dem Störlicht kann es sich beispielsweise um Sonnenlicht oder um Licht einer künstlichen Lichtquelle, z. B. Garagenlicht, handeln. Ebenfalls kann das Lichtmodul einen Polarisationsfilter aufweisen.

Es kann sein, dass das optische Sensorsystem ausgebildet ist, Erkennungsbilder und Vergleichsbilder aufzunehmen und gegebenenfalls auszuwerten. Erkennungsbilder entstehen mit Hilfe der Reflexion des emittierten Licht des Lichtmoduls. Vergleichsbilder entstehen nur mit Hilfe des Störlichts. Zum Entstehen der Vergleichsbilder emittiert das Lichtmodul kein Licht. Die Überwachungseinheit kann durch Vergleich eines Erkennungsbildes und eines Vergleichsbildes das Störlicht erkennen. Die Überwachungseinheit kann hierdurch ein modifiziertes Erkennungsbild generieren, aus dem das Störlicht entfernt ist. Das optische Sensorsystem kann so ausgebildet sein, dass jeweils nach einer vorgegebenen Anzahl von Erkennungsbildern ein Vergleichsbild aufgenommen wird.

Durch die o. g. Maßnahmen ist es möglich, dass das optische Sensorsystem ein Bild, das nur durch das Licht des Lichtmoduls erzeugt ist, generiert.

Die Überwachungseinheit kann einen Benutzer im Detektionsbereich erkennen. Hierzu wertet die Überwachungseinheit die vom optischen Sensor empfangenen Bilder nach vorgegebenen Kriterien aus. Die Überwachungseinheit kann in Schritt b) das Signal für den Start der Authentifizierungsüberprüfung auslösen.

Das Montagemodul kann ein Befestigungselement, insbesondere eine Installationsplatte, aufweisen, um einzelne Elemente des optischen Sensorsystems, d. h. den optischen Sensor, das Lichtmodul und/oder die Überwachungseinheit zu befestigen. Alternativ oder zusätzlich kann das Montagemodul ein Gehäuse umfassen, das das optische Sensorsystem zumindest teilweise umgibt. Die Überwachungseinheit kann zusammen mit dem Zugangskontrollsystem ausgebildet sein. Insbesondere bei einem Lichtmodul mit mehreren Lichtquellen kann das Befestigungselement kugelabschnittsartig ausgebildet sein.

Es kann sein, dass das optische Sensorsystem dazu ausgebildet ist, den Detektionsbereich dauerhaft bei einem abgestellten Kraftfahrzeug bis zu einer erfolgreichen Authentifizierung zu überwachen. Hierbei kann dauerhaft bedeuten, dass das optische Sensorsystem dazu ausgebildet ist, nach jeder vorgegebenen Zeitspanne t ein Bild aufzunehmen und/oder auszuwerten. Insbesondere kann die Zeitspanne t 1 ms ≤ t ≤ 3 s, bevorzugt 0,05 s ≤ t ≤ 0,5 s betragen. Das optische Sensorsystem kann vom Abstellen des Kraftfahrzeuges bis zu einer erfolgreichen Authentifizierung den Detektionsbereich überwachen. Die dauerhafte Überwachung kann beispielsweise ab dem Zeitpunkt durchgeführt werden, ab dem kein Zündschlüssel steckt und/oder das Kraftfahrzeug verriegelt ist.

Um den Detektionsbereich dauerhaft überwachen zu können, muss genügend elektrische Leistung über einen längeren Zeitraum dem optischen Sensorsystem und/oder dem Authentifizierungssystem zur Verfügung gestellt werden. Hierzu kann z. B. eine Batterie des Kraftfahrzeuges dem optischen Sensorsystem und/oder dem Authentifizierungssystem elektrische Leistung zur Verfügung stellen. Damit das abgestellte Kraftfahrzeug auch nach mehreren Wochen im abgestellten Zustand funktionsfähig ist, ist es notwendig, dass das optische Sensorsystem und/oder das Authentifizierungssystem nur eine geringe elektrische Leistung benötigt. Hierzu dienen die folgenden Maßnahmen. So kann z. B. das optische Sensorsystem eine geringe elektrische Leistung beim Emittieren des Lichtes und/oder eine geringe elektrische Leistung bei Auswertung des optischen Sensors benötigen. Des Weiteren kann das optische Sensorsystem so ausgebildet sein, dass das Signal für den Start der Authentifizierungsüberprüfung nur selten ausgelöst wird.

Es kann vorgesehen sein, dass jeder Punkt des Detektionsbereiches höchstens eine erste Entfernung x von dem optischen Sensor aufweist, wobei x 1,3 m ≤ x ≤ 2,5 m, bevorzugt 1,5 m ≤ x ≤ 2,0 m besonders bevorzugt x = 1,7 m beträgt. Hierdurch kann die elektrische Leistung des Lichtmoduls begrenzt werden.

Insbesondere kann in einer Draufsicht der Detektionsbereich einer zweidimensionalen geometrischen Figur entsprechen. Die geometrische Figur weist eine dem optischen Sensorsystem am weitesten entfernte Seite auf, die im Folgenden als Basis bezeichnet wird. Die Basis kann insbesondere eine zweite Entfernung vom optischen Sensor aufweisen, wodurch eine Länge L des Detektionsbereichs definiert ist. Die Basis kann insbesondere als Gerade ausgebildet sein. Die Basis kann insbesondere orthogonal zu einer optischen Achse des optischen Sensors verlaufen. Durch die Begrenzung des Detektionsbereichs durch die Basis kann der Rechenaufwand der Überwachungseinheit gering gehalten werden. Die Länge L kann 1,2 m ≤ L ≤ 2m, bevorzugt 1,3 m ≤ L ≤ 1,6 m, besonders bevorzugt L = 1,5 m betragen. Hierdurch kann die elektrische Leistung des Lichtmoduls begrenzt werden.

In einer Draufsicht kann der Detektionsbereich zwei Schenkel aufweisen. Der Detektionsbereich muss in der Draufsicht nicht symmetrisch sein. Die zwei Schenkel führen insbesondere von dem optischen Sensorsystem weg. Die zwei Schenkel bilden insbesondere einen Winkel α von 30° ≤ α ≤ 110°. Hierbei kann es sein, dass die zwei Schenkel des Detektionsbereiches verlängert werden müssen, um den Winkel α zu bilden. Dieses kann z. B. auftreten, wenn der Detektionsbereich in der Draufsicht die Form eines Trapezes aufweist. Insbesondere kann ein Winkel α im Bereich von 60° ≤ α ≤ 110° vorgesehen sein. Dieser Winkelbereich wird gewählt, damit ein Benutzer, der sich in Fahrzeugnähe dem optischen Sensor nähert, in den Detektionsbereich gelangt. Dieser Winkelbereich ist vor allem für Seitentüren sinnvoll. In Parkhäusern oder Garagen ist nämlich nur ein begrenzter Platz neben der Seitentür vorhanden, so dass sich ein Benutzer in einem spitzen Winkel von z. B. 35° dem Kraftfahrzeug nähert. Alternativ kann der Winkel bevorzugt im Bereich 30° ≤ α ≤ 90° ausgebildet sein, besonders bevorzugt im Bereich 30° ≤ α ≤ 60°. Dieser Winkelbereich ist insbesondere sinnvoll, wenn sich ein Benutzer nahezu orthogonal auf das Kraftfahrzeug zubewegen wird. Dieses ist insbesondere im Heckbereich der Fall. Durch die Wahl des kleinen Winkels wird vermieden, dass Benutzer, die nur an dem Kraftfahrzeug vorbei gehen, den Detektionsbereich beschreiten und damit den Start einer weitergehenden Prüfung, z. B. der Authentifizierungsüberprüfung, auslösen. Hierdurch kann eine elektrische Leistung eingespart werden.

Eine optische Achse des Lichtmoduls und/oder der Lichtquelle und die optische Achse des optischen Sensors können einen Abstand a aufweisen. Vorzugsweise ist der Abstand a gering gewählt. So kann es sein, dass der Abstand a in einem Bereich von 0 cm ≤ a ≤ 5 cm, bevorzugt 1 cm ≤ a ≤ 3 cm, besonders bevorzugt a = 2 cm aufweist. Hierdurch ist es möglich, dass möglichst viele Lichtstrahlen des Lichtmoduls auch im Empfangsbereich des optischen Sensors gelangen, so dass das Lichtmodul Licht einer geringen Intensität emittieren muss. Hierdurch muss das Lichtmodul eine geringere elektrische Leistung aufnehmen.

Ebenfalls ist es denkbar, den Empfangsbereich so weiträumig zu gestalten, dass der Empfangsbereich den Sendebereich vollständig umfasst. Hierdurch werden alle vom Lichtmodul emittierte Lichtstrahlen vom optischen Sensor empfangen, so dass elektrische Leistung eingespart wird.

Es kann sein, dass das optische Sensorsystem zwischen einem Ruhemodus und einem Arbeitsmodus schaltbar ist. Hierbei kann das optische Sensorsystem im Ruhemodus eine geringe elektrische Leistung erfordern als im Arbeitsmodus.

Ebenfalls ist es denkbar, die Auflösung des optischen Sensors gering zu wählen. Z. B. kann ein optischer Sensor gewählt werden, der nur eine Pixelanzahl enthält, durch die ein gewünschtes Objekt, z. B. ein Benutzer oder ein Körperteil eines Benutzers, im Detektionsbereich minimal mit nur zwei Pixel detektiert werden kann. Bei dem Körperteil kann es sich um eine Hand oder einen Fuß eines Benutzers handeln. Beispielsweise kann der Bildsensor des optischen Sensors und/oder das auszuwertende Bild zwischen 500 und 1500 Pixel enthalten. Das auszuwertende Bild kann hierbei auf dem ganzen Bildsensor oder nur einem Teil des Bildsensors abgebildet sein. Auch durch den Einsatz des bereits beschriebenen LDPD-Sensors kann elektrische Leistung eingespart werden, da der LDPD-Sensor für den Einsatz bei geringer Lichtintensität geeignet ist, so dass auch ein Lichtmodul mit einer geringen elektrischen Leistung verwendet werden kann.

Alternativ oder zusätzlich ist es denkbar, dass die Überwachungseinheit dazu ausgebildet ist, im Schritt a) während der Überwachung des Detektionsbereiches nur einen Teil des vom optischen Sensor aufgenommenen Bildes auszuwerten. Hierdurch benötigt die Überwachungseinheit eine geringere elektrische Leistung. Die Überwachungseinheit wertet insbesondere im Schritt a) nur eine Anzahl Pixel aus, die geringer als die Gesamtzahl der Pixel ist. Die ausgewerteten Pixel können gleichmäßig über den Bildsensor und/oder über das auszuwertende Bild verteilt sein. Beispielsweise kann nur jeder n-te Pixel mit 2 ≤ n ≤ 30 ausgewertet werden. Insbesondere kann nur jeder zweite Pixel ausgewertet werden. Die nur teilweise Auswertung des optischen Sensors kann insbesondere nur zeitweise erfolgen. Insbesondere kann die nur teilweise Auswertung des optischen Sensors im Ruhemodus erfolgen.

Ebenso kann durch die Wahl einer großen Zeitspanne t Energie gespart werden. So ist es denkbar, dass im Ruhemodus die Zeitspanne t größer gewählt ist als im Arbeitsmodus. Das heißt, im Ruhemodus ist die Bildfrequenz geringer als im Arbeitsmodus.

Das von dem Lichtmodul emittierte Licht kann gepulst sein. Es ist denkbar, dass die Pulsfrequenz im Ruhemodus geringer ist als im Arbeitsmodus.

Schritt a) umfasst auch das Erkennen eines Benutzers. Generell kann ein einmaliges Erkennen eines beliebigen Objektes im Detektionsbereich ausreichen, um einen Benutzer zu erkennen und das Signal zum Start der Authentifizierungsüberprüfung auszulösen. Um zu erreichen, dass das Signal zum Start der Authentifizierungsüberprüfung nur selten ausgelöst wird und somit elektrische Leistung gespart wird, ist es möglich, besondere Anforderungen an die Erkennung eines Benutzers zum Detektionsbereich zu stellen.

So ist es denkbar, dass ein Benutzer im Detektionsbereich nur erkannt wird, wenn sich ein Objekt über eine vorgegebene Detektionsdauer d im Detektionsbereich aufhält. Schon durch die Wahl der Zeitspanne t können u. U. Objekte, die sich eine geringere Zeit als die Zeitspanne t im Detektionsbereich aufhalten, nicht detektiert werden. Es kann jedoch auch sein, dass die Detektionsdauer d größer als die Zeitspanne t gewählt ist. Z. B. kann d mit 0,5 s ≤ d ≤ 10 s, bevorzugt 1 s ≤ d ≤ 5 s gewählt werden. Hierdurch können Objekte, die den Detektionsbereich nur kurz queren, nicht als Benutzer erkannt werden.

Ferner kann es vorgesehen sein, dass ein Benutzer im Detektionsbereich nur erkannt wird, wenn ein Objekt einer vorgegebenen Größe sich in dem Detektionsbereich aufhält. Hierbei muss beispielsweise die Anzahl der Pixel, die im optischen Sensor das Vorhandensein des Objektes belegen, eine vorgegebene Mindestanzahl erreichen. Diese Mindestanzahl und/oder die vorgegebene Größe kann in der Überwachungseinheit gespeichert sein. Die Größe kann beispielsweise der Größe eines erwachsenen Menschens entsprechen. Weiterhin ist es möglich, dass ein Benutzer im Detektionsbereich nur erkannt wird, wenn das Objekt sich im Detektionsbereich bewegt. Hierzu können beispielsweise die Pixel, die das Objekt abbilden, von mindestens zwei zeitlich hintereinander aufgenommenen Bildern, insbesondere Erkennungsbildern, verglichen werden. Zusätzlich oder alternativ kann beispielsweise ein Abstand des Objektes zum optischen Sensor bei mindestens zwei zeitlich hintereinander aufgenommenen Bildern, insbesondere Erkennungsbildern, gemessen werden. Werden unterschiedliche Abstände detektiert, so hat sich das Objekt in den Detektionsbereich bewegt. Um einen Abstand des Objektes zum optischen Sensor feststellen zu können, kann beispielsweise eine Time of Flight Messung durchgeführt werden. Hierbei werden z. B. ein oder mehrere Lichtpulse vom Lichtmodul ausgesandt und die Zeit, die der Lichtpuls zum Objekt und von dort zum optischen Sensor benötigt, gemessen. Die Zeit ist hierbei direkt proportional zum Abstand des Objektes.

Weiterhin ist es möglich, dass ein Benutzer im Detektionsbereich nur erkannt wird, wenn das Objekt sich in dem Detektionsbereich dem optischen Sensorsystem und/oder dem Kraftfahrzeug annähert. D. h., es ist nicht nur eine reine Bewegung des Objektes im Detektionsbereich ausreichend, um das Signal für den Start der Authentifizierungsüberprüfung auszulösen. Nur wenn sich der Abstand des Objektes zum optischen Sensor und/oder zum Kraftfahrzeug verringert, wird ein Signal für den Start der Authentifizierungsüberprüfung ausgelöst. Hierzu wird der Abstand des Objektes zum optischen Sensor bei mindestens zwei zeitlich hintereinander aufgenommenen Bildern, insbesondere Erkennungsbildern, gemessen. Zur Messung des Abstandes kann eine Time of Flight Messung durchgeführt werden.

Die Anforderungen an das Erkennen eines Benutzers, d. h. die Detektionsdauer, die Größe des Objektes, die Bewegung des Objektes, die Annäherung des Objektes können beliebig kombiniert werden. So kann es beispielsweise sein, dass das Objekt eine vorgegebene Größe haben und sich dem optischen Sensor annähern muss, um als Benutzer erkannt zu werden und ein Signal für den Start einer Authentifizierungsüberprüfung auszulösen.

Es ist denkbar, dass das optische Sensorsystem derart ausgebildet ist, dass der Detektionsbereich in mindestens zwei Zonen aufgeteilt ist, in eine Nahzone und in eine Fernzone. Die Nahzone liegt in einem geringeren Abstand zum optischen Sensorsystem als die Fernzone. Eine Grenze der Nahzone zur Fernzone kann in einem Abstand z zum optischen Sensorsystem vorgesehen sein. Beispielsweise beträgt z = 0,6 m. Die Grenze kann eine Gerade sein und insbesondere parallel zur Basis ausgebildet sein.

Es ist denkbar, dass ein Erkennen des Benutzers erst dann erfolgen kann, wenn der Benutzer sich in der Nahzone befindet. Insbesondere wird zumindest eine Anforderung an das Erkennen des Benutzers erst in der Nahzone überprüft. Insbesondere wird nur in der Nahzone überprüft, ob sich das Objekt dem optischen Sensor und/oder dem Kraftfahrzeug annähert.

Es kann sein, dass in der Fernzone eine Anforderung an das Erkennen des Benutzers überprüft wird. Z. B. kann die Größe des Objekts in der Fernzone überprüft werden. Insbesondere kann es sich um eine andere Anforderung handeln als diejenige, die in der Nahzone überprüft wird. Bevorzugt wird eine Anforderung in der Fernzone gewählt, die weniger elektrische Leistung benötigt als die Anforderung in der Nahzone. Es kann sein, dass eine Messung des Abstands des Objekts zum optischen Sensor nur in der Nahzone durchgeführt wird. Durch diese Aufteilung kann ebenfalls elektrische Leistung gespart werden. Es ist denkbar, dass sich das optische Sensorsystem in dem Ruhemodus befindet, wenn sich ein Objekt in der Fernzone aufhält, und sich in dem Arbeitsmodus befindet, wenn sich ein Objekt in der Nahzone befindet.

Ebenfalls kann durch Licht verschiedener Wellenlängen Energie gespart werden. So kann die Überwachung des Detektionsbereichs bis zum einmaligen Erkennen eines beliebigen Objekts im Detektionsbereich mit Licht einer längeren Wellenlänge erfolgen als das anschließende Überprüfen weiterer Anforderungen, die an das Erkennen eines Benutzers gestellt sind. So kann zunächst z. B. Licht einer Wellenlänge von 905 nm verwendet werden. Wird ein Objekt im Detektionsbereich festgestellt, so kann z. B. Licht einer Wellenlänge von 800 nm verwendet werden. Alternativ kann sich die Wellenlänge verkürzen, wenn das Objekt von der Fern- in die Nahzone wechselt.

Ebenfalls kann es vorteilhaft sein, die elektrische Energie pro Lichtquelle und/oder Lichtpuls zu senken. So können mehrere Lichtquellen in dem Lichtmodul vorhanden sein. Ebenfalls kann es sein, dass mehrere Lichtpulse nacheinander vom Lichtmodul emittiert werden, um ein Bild erzeugen zu können. Die Lichtpulse können aufintegriert oder aufsummiert werden, um das Bild zu erzeugen. Hierdurch kann die elektrische Leistung pro Lichtpuls herabgesenkt werden. Um in diesem Fall eine Abstandsmessung durchführen zu können, wird ein bestimmtes Zeitintervall für die Bildaufnahme vorgegeben. Die gesamte Intensität der erhaltenen Lichtpulse in dem Zeitintervall wird mit dem Abstand korreliert. Bevorzugt ist das optische Sensorsystem derart am Kraftfahrzeug angeordnet, dass es wenig verschmutzt. Z. B. kann das optische Sensorsystem hinter der Heckscheibe im Wischbereich des Scheibenwischers oder an der Griffleiste angeordnet sein. Alternativ oder zusätzlich kann das Montagemodul eine Waschdüse aufweisen, mit der das optische System gesäubert werden kann. Die Waschdüse kann hierbei z. B. immer dann automatisch das optische System reinigen, wenn auch der Scheibenwischer der Front- und/oder Heckscheibe betätigt wird. Ein sauberes optisches Sensorsystem benötigt eine geringere Lichtintensität zum Funktionieren, so dass auch hierdurch Energie gespart werden kann.

Das optische Sensorsystem kann ferner geeignet sein,
c) nach erfolgreicher Authentifizierung einen außerhalb des Kraftfahrzeuges liegenden sich vom Detektionsbereich unterscheidenden Betätigungsbereich zu überwachen,
d) im Falle eines Erkennens eines Benutzerwillens im Betätigungsbereich ein Arbeitssignal für das Kraftfahrzeug bereitzustellen.

Das Arbeitssignal kann ein Signal zum Öffnen und/oder Schließen eines beweglichen Teils sein. Alternativ oder zusätzlich kann das Arbeitssignal ein Signal zum Entriegeln und/oder Verriegeln des beweglichen Teils sein. Alternativ oder zusätzlich kann das Arbeitssignal ein Signal zum Ein- und/oder Ausfahren einer Anhängerkupplung sein. Insbesondere können bei der Überwachung des Betätigungsbereichs mehrere verschiedene Benutzerwillen, wie z. B. der Benutzerwille, ein bewegliches Teil zu öffnen, und der Benutzerwille, die Anhängerkupplung auszufahren, festgestellt werden. Schritt c) erfolgt insbesondere nach Schritt b). Schritt d) erfolgt insbesondere nach Schritt c).

Bei dem beweglichen Teil kann es sich insbesondere um eine Heckklappe und/oder eine Seitentür des Kraftfahrzeuges handeln. Die Heckklappe und/oder die Seitentür kann als Schiebetür ausgebildet sein. Nach dem Signal zum Öffnen des beweglichen Teils kann das bewegliche Teil entriegelt werden. Insbesondere durch die Federwirkung einer Dichtung des beweglichen Teils kann sich das bewegliche Teil danach teilweise aus einer geschlossenen Stellung bewegen und sich somit teilweise öffnen. Zusätzlich oder alternativ kann es sich bei dem Arbeitssignal um ein Signal handeln, das eine motorische Öffnungs- und/oder Zuziehhilfe aktiviert. Hierbei weist das Kraftfahrzeug einen Motor auf, der das bewegliche Teil vollständig öffnet und/oder schließt.

Bei dem Signal zum Öffnen und/oder Schließen des beweglichen Teils kann es sich insbesondere um ein Signal an ein elektromechanisches Türschloss handeln. So kann das elektromechanische Türschloss einen Bügel aufweisen, der von einem Riegel in einer Verschlussstellung gehalten wird. Liegt nun sowohl ein Entriegelungssignal als auch ein Arbeitssignal zum Öffnen des beweglichen Teils oder alternativ ein einziges Arbeitssignal zum Entriegeln und Öffnen vor, so wird der Riegel bewegt und gibt den Bügel des Türschlosses frei. Nun kann die Dichtung das bewegliche Teil aus der geschlossenen Stellung bewegen und somit teilweise öffnen.

Vorzugsweise ist der zumindest ein Teil des Betätigungsbereichs für den Benutzer sichtbar. Hierzu kann das Montagemodul ein Anzeigeelement aufweisen, durch das sichtbares Licht emittierbar ist, um den Betätigungsbereich für den Benutzer zumindest teilweise sichtbar zu machen. Das Anzeigeelement kann dazu ausgebildet sein, den Betätigungsbereich auf der Bodenfläche sichtbar zu machen. Der Betätigungsbereich kann sich auf die sichtbar gemachte Bodenfläche beschränken. Alternativ kann der Betätigungsbereich einen Kegelstumpf aufweisen und nur auf der sichtbar gemachten Bodenfläche enden. Insbesondere zur Betätigung der Heckklappe kann ein wie zuvor beschriebener Betätigungsbereich vorgesehen sein. Alternativ kann der Betätigungsbereich im Bereich des Türgriffes liegen. Dieses ist insbesondere für eine Seitentür des Kraftfahrzeuges vorgesehen. Der Betätigungsbereich kann aber auch einfach nur einen vorgegebenen Abstand oder Abstandsbereich vom Anzeigeelement aufweisen, der dem Benutzer bekannt ist. Hierbei kann das Anzeigeelement nur anzeigen, dass der Betätigungsbereich überwacht wird. Die Intensität des emittierten sichtbaren Lichts kann von der Helligkeit des Umgebungslichts abhängen. Die Helligkeit des Umgebungslichts kann durch einen Helligkeitssensor ermittelt werden.

Es kann sein, dass mehrere Betätigungsbereiche vorhanden sind und in jedem Betätigungsbereich der Benutzer den Benutzerwillen zeigen muss, damit der Benutzerwillen erkannt wird und das Arbeitssignal bereitgestellt wird.

Vorzugsweise wird im Schritt c) der Benutzerwille durch eine vordefinierte Bewegung erkannt. Bei der vordefinierten Bewegung kann es sich um die Bewegung eines Körperteils des Benutzers im oder am Betätigungsbereich handeln. Bei der vordefinierten Bewegung kann es sich zusätzlich oder alternativ um die Bewegung eines Körperteils des Benutzers in dem Betätigungsbereich und/oder aus dem Betätigungsbereich handeln. Das Körperteil kann ein Fuß oder eine Hand des Benutzers sein. Es kann auch sein, dass die vordefinierte Bewegung genauer festgelegt ist. So kann die vordefinierte Bewegung einer vorgegebenen Gestik entsprechen. Können bei der Überwachung des Betätigungsbereichs verschiedene Benutzerwillen festgestellt werden, so können verschiedenen Gestiken verschiedene Benutzerwillen zugeordnet werden. So kann z. B. mit dem Fuß in den Betätigungsbereich treten ein Öffnen der Heckklappe verursachen, während eine seitliche Bewegung einer Hand nahe dem optischen Sensor ein Ausfahren der Anhängerkupplung bewirkt.

Vorzugsweise muss zur Erkennung des Benutzerwillens im Schritt c) die vordefinierte Bewegung innerhalb einer Betätigungsdauer b erfolgen. Erfolgt die vordefinierte Bewegung nach der Betätigungsdauer b, so wird kein Arbeitssignal bereitgestellt.

Es ist denkbar, dass ein Entfernen des Objekts innerhalb einer vorgegebenen Entfernungsdauer aus dem Betätigungsbereich erfolgen muss, damit das Arbeitssignal bereitgestellt wird. Das Entfernen eines Objektes innerhalb einer vorgegebenen Entfernungsdauer kann Teil der Gestik sein. Der Beginn der Entfernungsdauer ist für den Benutzer wahrnehmbar. So kann z. B. das Anzeigeelement mehrere Beleuchtungszustände einnehmen. In einem der Beleuchtungszustände kann das Anzeigeelement Licht einer konstanten Helligkeit emittieren. In einem anderen Beleuchtungszustand kann z. B. die Helligkeit sich periodisch ändern. So kann z. B. der Beginn der Betätigungsdauer das Anzeigeelement Licht konstanter Helligkeit emittieren. Während der Entfernungsdauer kann das Anzeigelement z. B. blinken. Nur wenn das Objekt, insbesondere ein Körperteil des Benutzers, innerhalb der Entfernungsdauer aus dem Betätigungsbereich entfernt wird, wird das Arbeitssignal bereitgestellt.

Es kann sein, dass eine Messung des Abstands des Körperteils zum optischen Sensor durchgeführt wird, um die Bewegung im Betätigungsbereich erkennen zu können. Hierbei wird insbesondere der Abstand bei zumindest zwei aufeinanderfolgenden Bildern, insbesondere Erkennungsbildern, gemessen. Der Abstand kann durch eine Time of Flight Messung durchgeführt werden. Es kann sein, dass der optische Sensor eine Auflösung aufweist, bei der zwei Pixel der Fläche des Körperteils entsprechen.

Es kann vorgesehen sein, dass der Detektionsbereich in einer Draufsicht eine größere räumliche Ausdehnung als der Betätigungsbereich aufweist.

Das Montagemodul kann so ausgebildet sein, dass in einer Draufsicht der Detektionsbereich weiter entfernt vom Kraftfahrzeug als der Betätigungsbereich endet. Hierdurch wird sichergestellt, dass nach einer positiven Authentifizierung sich der Betätigungsbereich zwischen dem Benutzer und dem Kraftfahrzeug befindet. D. h., der Benutzer kann in der Regel seine Bewegungsrichtung beibehalten, um den Betätigungsbereich zu erreichen. In einer Draufsicht kann sich der Betätigungsbereich innerhalb des Detektionsbereiches befinden. Alternativ kann vorgesehen sein, dass in einer Draufsicht sich der Betätigungsbereich näher am Kraftfahrzeug als der Detektionsbereich befindet. Insbesondere kann sich der Betätigungsbereich an den Detektionsbereich anschließen.

Vorzugsweise sind der optische Sensor und das Lichtmodul dazu ausgebildet, sowohl zur Überwachung des Detektionsbereichs als auch zum Überwachen des Betätigungsbereichs eingesetzt zu werden. D. h., derselbe optische Sensor und dasselbe optische Lichtmodul werden verwendet, um die Schritte a) und c) durchzuführen. Insbesondere kann das Lichtmodul zur Überwachung des Detektionsbereiches das gleiche Licht bzgl. der Wellenlänge und/oder der Dauer eines Lichtpulses wie zur Überwachung des Betätigungsbereiches emittieren. Vorzugsweise wird der Aufbau des optischen Sensorsystems nicht verändert. So kann das Lichtmodul zur Überwachung des Detektionsbereiches denselben Sendebereich wie zur Überwachung des Betätigungsbereiches aufweisen. Ebenfalls kann der optische Sensor zu der Überwachung des Detektionsbereiches denselben Empfangsbereich wie zu der Überwachung des Betätigungsbereiches aufweisen. Hierzu kann es sein, dass der optische Sensor und/oder das Lichtmodul ein starres Linsensystem aufweist. Durch diese Maßnahmen kann es sein, dass das optische Sensorsystem besonders kostengünstig hergestellt wird. Da vorzugsweise der Betätigungsbereich eine geringere räumliche Ausdehnung als Detektionsbereich aufweist, kann es sein, dass die Überwachungseinheit zur Überwachung des Betätigungsbereiches im Schritt c) nur einen Teil des vom optischen Sensor aufgenommenen Bildes auswertet. Dieser Teil entspricht dem Bild des Betätigungsbereiches. Die Anzahl der ausgewerteten Pixel ist geringer als die Gesamtzahl der Pixel.

Erfindungsgemäß kann vorgesehen sein, dass das Anzeigeelement derart ausgeführt ist, dass das Anzeigeelement zumindest in einen ersten und einen zweiten Betriebsmodus schaltbar ist, wobei nach einer erfolgreichen Authentifizierung das Anzeigeelement in dem ersten Betriebsmodus den Betätigungsbereich mit einer nahezu konstanten Helligkeit visualisiert, und nach einer Erkennung eines Benutzerwillens im Betätigungsbereich durch das Sensorsystem das Anzeigeelement in den zweiten Betriebsmodus fährt, in dem die Helligkeit des Betätigungsbereiches reduziert wird, insbesondere die Helligkeit auf 0% reduziert wird.

Vorteilhafterweise wird die Helligkeit des Betätigungsbereiches gedimmt, insbesondere gleichmäßig oder über mindestens zwei oder mit einer Vielzahl von sprunghaften Schritten. Sowohl während des ersten als auch im zweiten Betriebsmodus erfolgt eine Überwachung des Betätigungsbereiches durch das optische Sensorsystem. Die Überwachung kann auch dann fortgesetzt werden, wenn der Betätigungsbereich nicht mehr visualisiert wird, da beispielsweise die Helligkeit des Betätigungsbereiches bei 0% liegt. Der Betätigungsbereich kann unterschiedliche Größen und/oder Geometrien aufweisen, beispielsweise punktförmig, kreisförmig, oval, rechteckig, quadratisch, linienförmig, etc. Die Zeit der Dimmdauer während des zweiten Betriebsmodus kann maximal 10 Sekunden, vorzugsweise maximal 6 Sekunden, vorzugsweise maximal 3 Sekunden dauern. Benutzerwillen kann zum Beispiel bedeuten, dass ein Fuß des Benutzers in den Betätigungsbereich geführt bzw. gestellt wird, und zwar im ersten Betriebsmodus. Erkennt dieses das Sensorsystem, erfolgt eine Schaltung des Anzeigeelementes in den zweiten Betriebsmodus. Entfernt dann anschließend der Benutzer seinen Fuß aus dem Betätigungsbereich, wird das Arbeitssignal ausgelöst. Der erste und/oder der zweite Betriebsmodus kann maximal 10 Sekunden, vorzugsweise maximal 6 Sekunden, besonders bevorzugt maximal 3 Sekunden dauern. Erfolgt während des zweiten Betriebsmodus nicht eine definierte Bewegung des Benutzers im Betätigungsbereich bzw. nicht in der definierten Zeit, wird kein Arbeitssignal ausgelöst. Der Benutzerwille kann eine jegliche Bewegung des Benutzers in den Betätigungsbereich bedeuten.

Es kann sein, dass das Anzeigeelement im Sensorsystem integriert ist. Es reicht aus, dass das Sensorsystem in Signalverbindung mit dem Anzeigeelement ist, das bedeutet, dass die wesentlichen Bestandteile des Sensorsystems sowie das Anzeigeelement an unterschiedlichen Orten am Kraftfahrzeug positioniert sein können. Durch das Dimmen wird vorteilhafterweise ein geringerer Stromverbrauch realisiert. Zudem entsteht eine geringere Wärmeentwicklung.

Es kann vorgesehen sein, dass das Montagemodul und/oder Kraftfahrzeug zumindest ein Mittel aufweist, das es dem Benutzer erleichtert, den Benutzerwillen im Betätigungsbereich kund zu tun, so dass das Arbeitssignal ausgelöst wird.

So kann das Montagemodul ein Hinweissignal aussenden, dass die Betätigungsdauer in Kürze enden wird. Das Hinweissignal kann z. B. durch einen Wechsel des Beleuchtungszustands des Anzeigeelements beginnen. Das Hinweissignal kann einem anderen Beleuchtungszustand des Anzeigeelements entsprechen. Z. B. kann zum Ende der Betätigungsdauer das Anzeigeelement blinken. Das Mittel entspricht einer entsprechenden Verfahrensvorgabe in der Überwachungseinheit.

Ebenfalls kann es für den Benutzer zum Kundtun seines Benutzerwillens hilfreich sein, wenn der Benutzer zu dem Betätigungsbereich geleitet wird. Dieses ist insbesondere der Fall, wenn der Benutzer durch Tragen eines großen Gegenstandes die Endfläche des Betätigungsbereichs auf der Bodenfläche nicht wahrnehmen kann. Hierzu kann das Montagemodul und/oder das Kraftfahrzeug Mittel aufweisen, durch die für den Benutzer ein wahrnehmbares, insbesondere sichtbares, hörbares oder fühlbares, Signal erzeugt werden kann. So kann beispielsweise das Montagemodul Leuchtelemente, z. B. LEDs, aufweisen. Die Leuchtelemente können so angeordnet sein, dass die Leuchtelemente als Wegweiser wirken. Beispielsweise können die Leuchtelemente derart ausgerichtet sein, dass sie Markierungen auf der Bodenfläche erzeugen, die zum Betätigungsbereich hinführen. Zusätzlich oder alternativ können die Leuchtelemente nebeneinander angeordnet sein. Die Leuchtelemente können in einer Reihenfolge angeschaltet werden, die dem Benutzer zeigt, in welche Richtung der Benutzer sich auf den Betätigungsbereich zubewegen muss. Anstelle der Leuchtelemente können hierfür auch vorhandene, nebeneinander im Kraftfahrzeug angeordnete Lichtelemente, z. B. die Leuchtelemente eines Scheinwerfers, einer Bremsleuchte, Blinker oder dergleichen, verwendet werden. Ebenfalls ist es denkbar, dem Benutzer akustisch hörbar eine Anleitung zu geben, in welche Richtung der Benutzer sich bewegen muss. Hierzu kann das Montagemodul einen Lautsprecher aufweisen. Ebenfalls ist es denkbar, die Richtungsänderung dem ID-Geber mitzuteilen, der durch verschiedene Vibrationen dem Benutzer den Weg weist. Wird dem Benutzer eine Richtungsänderung mitgeteilt, so ermittelt das optische Sensorsystem die Position des Benutzers und die Richtung, in die er sich zu dem Betätigungsbereich bewegen muss, und veranlasst das wahrnehmbare Mittel, das entsprechende Signal auszusenden.

Ebenfalls kann es für den Benutzer hilfreich sein, dass die Position des Betätigungsbereichs und/oder die Länge der Betätigungsdauer veränderbar ist. Dieses ist insbesondere hilfreich, wenn ein körperlich beeinträchtigter Benutzer seinen Benutzerwillen kund tun möchte. Ebenfalls ist dieses hilfreich, wenn der Betätigungsbereich an einer für den Benutzer ungünstigen Position angeordnet ist. Die ungünstige Position kann hierbei dauerhaft sein. Z. B. kann der Betätigungsbereich auf einer Anhängerkupplung enden. Alternativ kann die ungünstige Position nur für ein Auslösen eines einmaligen Arbeitssignals ungünstig sein, z. B. weil der Betätigungsbereich an einer Pfütze endet. Um die Position des Betätigungsbereichs und/oder die Länge der Betätigungsdauer zu ändern, kann insbesondere eine vordefinierte Benutzerhandlung vorgesehen sein. So kann z. B. der Benutzer die Position des Betätigungsbereichs und/oder Länge der Betätigungsdauer durch eine Eingabe in einem Benutzermenü, z. B. eines KFZ-Steuergeräts oder eines ID-Gebers, ändern. Alternativ kann die vordefinierte Benutzerhandlung vom optischen Sensorsystem erkannt werden. In einer weiteren Alternative kann das Montagemodul in einen Lernmodus überführt werden, in dem das Montagemodul die geänderte Position des Betätigungsbereichs und/oder die geänderte Länge des Betätigungsbereichs lernt.

Ebenfalls kann es für den Benutzer hilfreich sein, dass der Betätigungsbereich erneut überwacht ist, um einen Benutzerwillen zum Auslösen eines Arbeitssignals festzustellen, nachdem eine erste Betätigungsdauer ohne Erkennen eines Benutzerwillens beendet ist. Dieses ist insbesondere hilfreich, wenn der Benutzer abgelenkt war und den Betätigungsbereich nicht rechtzeitig erreicht hat oder die falsche Gestik durchgeführt hat. Daher kann vorgesehen sein, dass der Betätigungsbereich mehrmals, insbesondere zwei- oder dreimal, hintereinander überwachbar ist. Das erneute Überwachen des Betätigungsbereichs kann automatisch eingeleitet werden. Alternativ kann eine vordefinierte Benutzerhandlung vorgesehen sein, um den Betätigungsbereich erneut für eine weitere Betätigungsdauer zu überwachen. Hierzu kann beispielsweise ein kapazitiver Sensor von dem Benutzer angesprochen werden. Alternativ kann es sich um eine vordefinierte Benutzerhandlung handeln, die vom optischen Sensorsystem erkannt wird.

Bei der vordefinierten Benutzerhandlung, die vom optischen Sensorsystem erkannt wird und die eine Änderung der Position des Betätigungsbereichs und/oder der Betätigungsdauer und/oder eine erneute Überwachung des Betätigungsbereichs zum Erkennen eines Benutzerwillens veranlasst, kann es sich beispielhaft um folgende Benutzerhandlungen handeln: eine vorgegebene Gestik innerhalb des Betätigungs- und/oder Detektionsbereichs, beispielsweise ein Hin- und Herbewegen eines Körperteils des Benutzers, ein Nicht-Entfernen des Körperteils, sofern ein Entfernen vorgesehen war, eine Bewegung des Benutzers in den Detektions- und/oder Betätigungsbereich und/oder aus dem Detektions- und/oder Betätigungsbereich. Insbesondere kann der Körperteil eine Hand oder ein Fuß sein. Insbesondere kann vorgesehen sein, dass der Benutzer den Detektionsbereich für eine vorgegebene Zeit verlässt und sich dann wieder in den Detektionsbereich begibt.

Wird der Betätigungsbereich erneut zum Feststellen eines Benutzerwillens überwacht, so zeigt auch das Anzeigeelement dieses an. Wird die Position des Betätigungsbereichs verändert, so zeigt das Anzeigeelement dieses an. Hierzu kann das Anzeigeelement mehrere Leuchtmittel, z. B. LEDs, aufweisen. Jeweils ein oder mehrere Leuchtmittel machen jeweils einen Betätigungsbereich zumindest teilweise sichtbar. Vorzugsweise liegt der Betätigungsbereich mit der geänderten Position innerhalb des Detektionsbereichs. Je nachdem welcher Betätigungsbereich überwacht wird, werden die entsprechenden Pixel ausgewertet.

Die Erfindung umfasst auch ein Authentifizierungssystem mit einem ID-Geber, einem Zugangskontrollsystem und einem erfindungsgemäßen Montagemodul. Hierbei kann das Montagemodul wie beschrieben und/oder beansprucht ausgebildet sein. Das Authentifizierungssystem ist geeignet, die Authentifizierungüberprüfung für eine Zugangsberechtigung vorzunehmen. Nachdem das Montagemodul das Signal für die Authentifizierungsüberprüfung ausgelöst hat, kann die Authentifizierungsüberprüfung fortgesetzt werden. Z. B. kann nach Schritt b) das Zugangskontrollsystem ein Wecksignal an den ID-Geber senden. Daraufhin kann der ID-Geber einen Authentifizierungscode an das Zugangskontrollsystem senden. Das Zugangskontrollsystem kann den empfangenen Authentifizierungscode mit einem gespeicherten Code vergleichen. Insbesondere kann im Falle einer Übereinstimmung, d. h. im Falle einer erfolgreichen Authentifizierung, ein Signal ausgelöst werden. Hierbei kann es sich um ein Entriegelungssignal handeln. Alternativ handelt es sich um ein Signal zur Überwachung des Betätigungsbereichs. Das Entriegelungssignal wird in diesem Fall erst ausgelöst, wenn zumindest ein weiteres Signal, insbesondere das Arbeitssignal, und/oder eine weitere Authentifizierung erfolgt ist. In einer weiteren Alternative umfasst das Arbeitssignal auch das Entriegelungssignal.

Es kann sein, dass eine Position des ID-Gebers während oder nach der Authentifizierung und vor Auslösen des Arbeitssignals überprüft wird. Hierzu kann die Stärke eines von einem ID-Geber ausgesendeten Signals verwendet werden. Beispielsweise kann der Receive Signal Strength Indicator (RSSI) hierzu verwendet werden. Durch die Ermittlung der Stärke des ausgesendeten Signals kann z. B. festgestellt werden, ob sich der Benutzer vor, neben oder hinter dem Kraftfahrzeug befindet. Hierdurch kann sichergestellt werden, dass nur der berechtigte Benutzer selber in den Detektionsbereich gelangt ist und seinen Benutzerwillen im Betätigungsbereich kundgetan hat. Es ist denkbar, den RSSI zyklisch abzufragen.

Die Aufgabe der Erfindung wird auch durch ein Verfahren zum Auslösen mindestens eines Signals für ein Kraftfahrzeug mit folgenden Schritten gelöst:
a) Überwachung eines außerhalb des Kraftfahrzeugs liegenden Detektionsbereich durch ein optisches Sensorsystem, um eine Nähe eines Benutzers festzustellen,
b) Auslösen eines Signals für den Start einer Authentifizierungsüberprüfung zwischen einem ID-Geber und einem Zugangskontrollsystem des Kraftfahrzeuges im Falle eines Erkennens des Benutzers im Detektionsbereich,
c) wobei das Sensorsystem nach erfolgreicher Authentifizierung einen außerhalb des Kraftfahrzeuges liegenden, sich vom Detektionsbereich unterscheidenden Betätigungsbereich überwacht,
d) im Falle eines Erkennens eines Benutzerwillens im Betätigungsbereichein Arbeitssignal für das Kraftfahrzeug insbesondere ein Signal zum Öffnen und/oder Schließen eines beweglichen Teils bereitstellt,
e) der Betätigungsbereich durch ein Anzeigeelement visualisiert wird, wobei das Anzeigeelement in einen ersten Betriebsmodus geschaltet wird, wenn eine erfolgreiche Authentifizierung vorliegt,
wobei, wenn das Sensorsystem den Benutzerwillen im Betätigungsbereich erkennt, das Anzeigeelement in den zweiten Betriebsmodus geschaltet wird, bei dem die Helligkeit des Betätigungsbereiches unterschiedlich zur Helligkeit des Betätigungsbereiches des ersten Betriebsmodus ist.

Das Verfahren zeichnet sich dadurch aus, dass der Benutzer komfortabel eine Aktion innerhalb des Kraftfahrzeuges auslösen kann. Zudem ergeben sich die gleichen Vorteile, die für das erfindungsgemäße Montagemodul gelten.

Ebenfalls kann erfindungsgemäß vorgesehen sein, dass die Helligkeit des Betätigungsbereiches im ersten Betriebsmodus konstant ist und/oder die Helligkeit des Betätigungsbereiches im zweiten Betriebsmodus gedimmt wird, insbesondere auf 0% Helligkeit gedimmt wird. Zudem ist es denkbar, dass während des ersten und/oder des zweiten Betriebsmodus das Sensorsystem den Betätigungsbereich überwacht. Vorteilhafterweise kann erfindungsgemäß vorgesehen sein, dass, erst wenn während des zweiten Betriebsmodus der Benutzer aus dem Betätigungsbereich (22) sich entfernt, das Arbeitssignal ausgelöst wird.
Das Signal für den Start der Authentifizierungsüberprüfung wird bevorzugt vom optischen Sensorsystem ausgelöst.

Bevorzugt handelt es sich bei dem erfindungsgemäßen Verfahren um ein Verfahren, das mit einem Montagemodul, wie es zuvor beschrieben ist, ausführbar ist. Insbesondere kann es sich bei der Authentifizierung um eine Passive-Keyless-Entry-Überprüfung handeln. Im Folgenden sollen einige erfindungswesentliche Punkte erneut dargestellt werden, wobei für genauere Ausführungen auf die Beschreibung zum erfindungsgemäßen Montagemodul und dem erfindungsgemäßen Authentifizierungssystem verwiesen wird, die ebenfalls für das erfindungsgemäße Verfahren gelten.

Der Detektionsbereich kann dauerhaft beim abgestellten Kraftfahrzeug bis zu einer erfolgreichen Authentifizierung überwacht werden. Hierbei kann während dieser Überwachung nach jeder vorgegebenen Zeitspanne t der optische Sensor ausgewertet werden.

Das optische Sensorsystem kann Erkennungsbilder und Vergleichsbilder aufnehmen und gegebenenfalls auswerten. Durch einen Vergleich eines Erkennungsbildes und eines Vergleichsbildes kann Störlicht erkannt werden. Ein modifiziertes Erkennungsbild kann generiert werden, aus dem das Störlicht entfernt ist. Es kann vorgesehen sein, dass jeweils nach einer vorgegebenen Anzahl von Erkennungsbildern ein Vergleichsbild aufgenommen wird.

Es kann sein, dass das optische Sensorsystem zwischen einem Ruhemodus und einem Arbeitsmodus schalten kann. Im Ruhemodus kann die Bildfrequenz niedriger sein als im Arbeitsmodus.

Das von dem Lichtmodul emittierte Licht kann gepulst sein. Es ist denkbar, dass die Pulsfrequenz im Ruhemodus geringer ist als im Arbeitsmodus. Ebenfalls kann es sein, dass mehrere Lichtpulse vom Lichtmodul nacheinander emittiert werden, um ein Bild erzeugen zu können. Die Lichtpulse werden aufintegriert oder aufsummiert, um das Bild zu erzeugen.

Ebenfalls kann die Überwachungseinheit im Schritt a) während der Überwachung des Detektionsbereiches nur einen Teil des vom optischen Sensor aufgenommenen Bildes auswerten.

Die Anforderungen an das Erkennen eines Benutzers in Schritt a) können Anforderungen an ein Objekt im Detektionsbereich bzgl. der Detektionsdauer, der Größe des Objektes, der Bewegung des Objektes und/oder der Annäherung des Objektes an den optischen Sensor enthalten. Eine Time of Flight Messung kann dazu verwendet werden, eine Bewegung des Objekts im Detektionsbereich zu erkennen.

Es ist denkbar, dass ein Erkennen des Benutzers erst dann erfolgen kann, wenn der Benutzer sich in einer Nahzone des Detektionsbereichs befindet. Insbesondere wird zumindest eine Anforderung an das Erkennen des Benutzers erst in der Nahzone überprüft. Ebenfalls kann der Detektionsbereich eine Fernzone enthalten, deren Aufgabe zuvor beschrieben wurde. Es ist denkbar, dass sich das optische Sensorsystem in dem Ruhemodus befindet, wenn sich ein Objekt in der Fernzone aufhält und in dem Arbeitsmodus befindet, wenn sich ein Objekt in der Nahzone befindet.

Das erfindungsgemäße Verfahren kann mit dem Auslösen eines Signals für den Start der Authentifizierungsüberprüfung enden. Das erfindungsgemäße Verfahren kann jedoch auch weitere Schritte c) und d) bis zum Bereitstellen eines Arbeitssignals, insbesondere zum Öffnen und/oder Schließen eines beweglichen Teils umfassen.

So wird vorzugsweise das Zugangskontrollsystem ein Wecksignal an den ID-Geber senden. Anschließend wird ein Authentifizierungscode vom ID-Geber zu einem Zugangskontrollsystem des Kraftfahrzeuges gesendet. Daraufhin vergleicht das Zugangskontrollsystem den Authentifizierungscode mit einem gespeicherten Code. Gegebenenfalls kann im Falle einer Übereinstimmung ein Signal, insbesondere ein Entriegelungssignal und/oder ein Signal zur Überwachung eines Betätigungsbereichs, ausgelöst werden. Danach können die Schritte c) und d) durchgeführt werden.

Unter Schutz wird auch ein Verfahren gestellt, das mit einem erfindungsgemäßen Montagemodul ausführbar ist sowie ein Montagemodul, das ein erfindungsgemäßes Verfahren ausführen kann. Hierzu kann insbesondere die Überwachungseinheit einen Prozessor und einen Speicher aufweisen, mit dessen Hilfe das erfindungsgemäße Verfahren ausführbar ist. Das erfindungsgemäße Verfahren kann in dem Speicher hinterlegt sein.

Weitere, die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen der Beschreibung oder Zeichnung der vorgegebenen Merkmalen oder Vorteile einschließlich konstruktiver Einzelheiten, räumliche Anordnung und Verfahrensschritte können sowohl für sich als auch in den verschiedensten Kombinationen erfindungswesentlich sein. Es zeigen:
- Fig. 1: eine Draufsicht auf einen Heckbereich eines Kraftfahrzeuges mit einem erfindungsgemäßen Montagemodul und einem erfindungsgemäßen Authentifizierungssystem,
- Fig. 2: der Heckbereich aus Figur 1 in einer Seitenansicht,
- Fig. 3: ein Seitenbereich eines Kraftfahrzeuges mit einem erfindungsgemäßen Montagemodul und einem erfindungsgemäßen Authentifizierungssystem in einer Seitenansicht,
- Fig. 4: das Montagemodul aus Figur 3 in einer anderen Seitenansicht,
- Fig. 5: eine Draufsicht auf ein erstes erfindungsgemäßes Montagemodul,
- Fig. 6: eine Draufsicht auf ein zweites erfindungsgemäßes Montagemodul,
- Fig. 7: ein drittes erfindungsgemäßes Montagemodul in einer Vorderansicht,
- Fig. 8: eine Ansicht auf einen Bildsensor aus Figur 7, wobei dargestellt ist, wie eine Überwachungseinheit eines erfindungsgemäßen Montagemoduls den Bildsensor auswerten kann,
- Fig. 9: eine weitere Ansicht des Bildsensors aus Figur 7, wobei dargestellt ist, auf welche weitere Weise die Überwachungseinheit den Bildsensor auswerten kann,
- Fig. 10: eine Darstellung der Strahlungsintensität über der Zeit, die von einem erfindungsgemäßen Montagemodul emittiert wird, und
- Fig. 11: ein erfindungsgemäßes Verfahren.

Elemente mit gleicher Funktion und Wirkungsweise sind in den Figuren mit denselben Bezugszeichen bezeichnet.

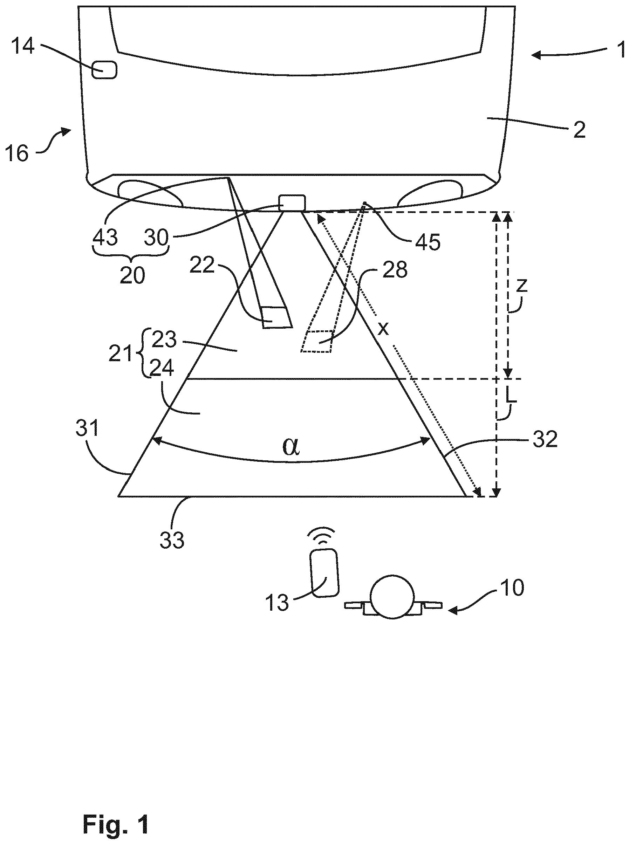

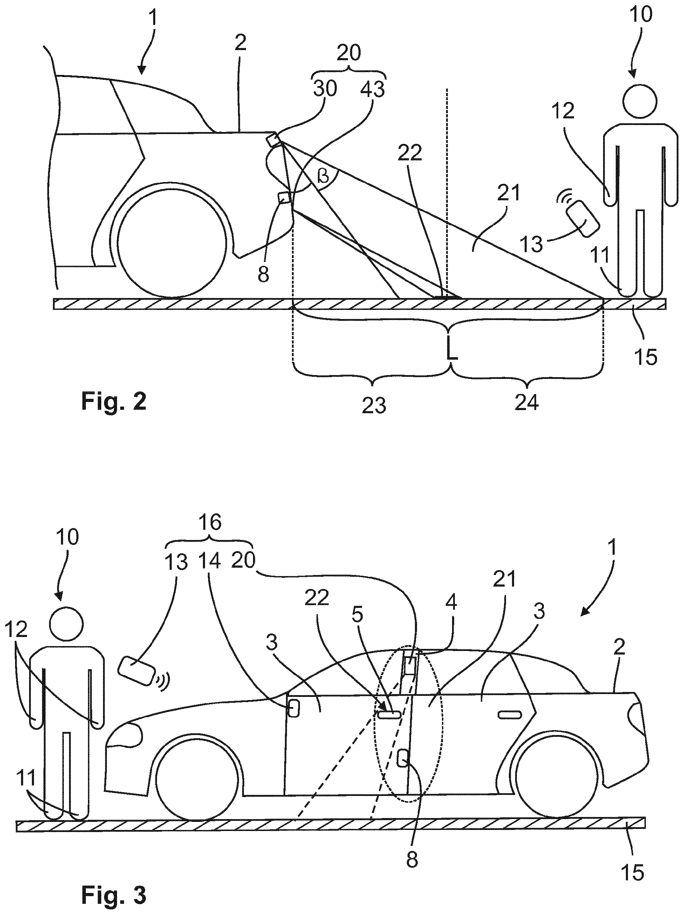

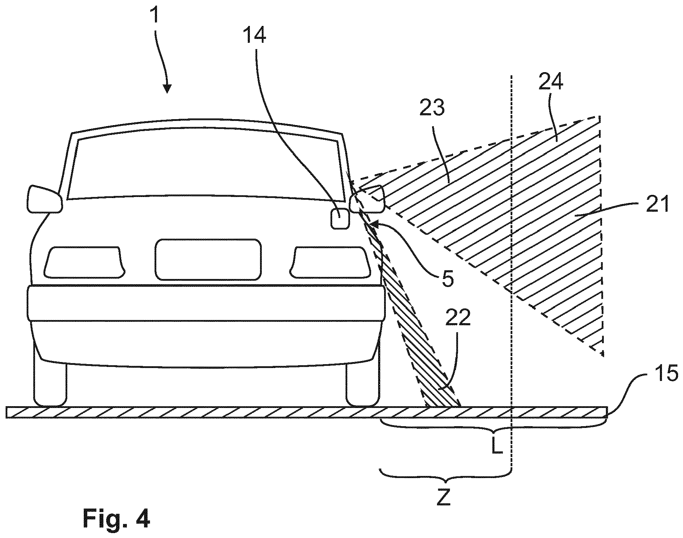

In den Figuren 1 und 2 einerseits und in den Figuren 3 und 4 andererseits ist jeweils dargestellt, wie ein erfindungsgemäßes Montagemodul 20 und ein erfindungsgemäßes Authentifizierungssystem 16 bei einem Kraftfahrzeug 1 eingesetzt werden. In den Figuren 1 und 2 ist hierbei der Einsatz in einem Heckbereich eines Kraftfahrzeuges 1 mit einer Heckklappe 2 dargestellt. Das optische Sensorsystem 30 des Montagemoduls 20 ist im Bereich der Heckklappe 2, z. B. in einer Griffleiste der Heckklappe 2, angeordnet. Durch das optische Sensorsystem 30 wird ein außerhalb des Kraftfahrzeuges 1 liegender Detektionsbereich 21 erzeugt. Das optische Sensorsystem 30 überwacht bei einem abgestellten Kraftfahrzeug 1 den Detektionsbereich 21 dauerhaft. Nähert sich ein Benutzer 10, der in den Figuren 1 und 2 noch außerhalb des Detektionsbereiches 21 dargestellt ist, mit einem ID-Geber 13 dem Kraftfahrzeug 1 und dem optischen Sensorsystem 30, so gelangt der Benutzer 10 in den Detektionsbereich 21. Wird der Benutzer 10 in dem Detektionsbereich 21 erkannt, so wird ein Signal zum Starten einer Authentifizierungsüberprüfung ausgelöst.

Dadurch, dass das optische Sensorsystem 30 erkennt, dass sich ein Benutzer 10 dem Kraftfahrzeug 1 nähert, und im Falle eines Erkennens des Benutzers 10 im Detektionsbereich 21 ein Signal für den Start einer Authentifizierungsüberprüfung ausgelöst wird, muss der Benutzer nicht aktiv werden, um die Authentifizierungsüberprüfung einzuleiten. Somit muss der Benutzer 10 den ID-Geber 13 nicht in einer Hand 12 halten, sondern es genügt, den ID-Geber 13 beispielsweise in einer Tasche bei sich zu führen. Somit handelt es sich um eine Passive-Keyless-Entry-Überprüfung.

Dadurch, dass ein optisches Sensorsystem 30 den Detektionsbereich 21 überwacht, kann zum einen gewährleistet werden, dass das Signal für den Start der Authentifizierungsüberprüfung ausgelöst wird, bevor der Benutzer 10 das Kraftfahrzeug 1 erreicht. Hierbei wird üblicherweise die Authentifizierungsüberprüfung abgeschlossen sein, bevor der Benutzer 10 näher als ein erster Betätigungsbereich 22 an das Kraftfahrzeug 1 herangekommen ist. Andererseits ist der Detektionsbereich 21 auf einen vorgegebenen Raumabschnitt beschränkt, der beispielsweise in einer Draufsicht nur wenige m² umfasst, sodass nur selten das Signal für den Start der Authentifizierungsüberprüfung ausgelöst wird. Hierdurch kann rechtzeitig und gezielt das Signal für den Start der Authentifizierungsüberprüfung ausgelöst werden.

In einer Draufsicht weist der Detektionsbereich 21 zwei Schenkel 31, 32 auf, die sich zum optischen Sensorsystem 30 hin annähern. Ebenfalls weist der Detektionsbereich 21 eine Basis 33 auf, die an der dem optischen Sensorsystem 30 abgewandten Seite des Detektionsbereiches 21 den Detektionsbereich 21 begrenzt. Der Detektionsbereich 21 endet an der Basis 33. Die Basis 33 ist gerade ausgebildet. Die beiden Schenkel 31, 32 bilden einen Winkel α. Durch den sich verjüngenden Detektionsbereich 21 in Richtung des Kraftfahrzeuges 1 kann die rechtzeitige und dennoch seltene Auslösung des Signals zum Start einer Authentifizierung besonders gut erreicht werden.

Der Winkel α beträgt in Figur 1 zwischen 30° und 60°. Hierdurch wird verhindert, dass ein Benutzer 10, der seitlich an dem Kraftfahrzeug 1 vorbeiläuft, in den Detektionsbereich 21 gelangt. Eine Länge L, die sich aus dem Abstand der Basis 33 zu dem optischen Sensorsystem 20 ergibt, beträgt 1,5 m. Durch die Länge L und den Winkel α ergibt sich auch x als maximale Entfernung eines Punktes des Detektionsbereichs 21 zum optischen Sensorsystem 30. Durch die gewählten Parameter ist der Detektionsbereich 21 begrenzt, so dass nur wenig elektrische Leistung zum Überwachen des Detektionsbereichs 21 benötigt wird. Wie in Figur 2 dargestellt endet der Detektionsbereich 21 auf einer Bodenfläche 15, auf der das Kraftfahrzeug 1 abgestellt ist. Hierdurch weist der Detektionsbereich 21 einen schrägen Kegelstumpf auf. Ein in Fig. 2 abgebildeter Winkel β entspricht einem Winkel des Detektionsbereichs 21 in einer Seitenansicht. Vorliegend ist der Winkel α ungleich dem Winkel β gewählt, so dass der Detektionsbereich elliptisch ausgebildet ist.

Eine weitere Möglichkeit, nur wenig elektrische Leistung zu benötigen, wird durch die Aufteilung des Detektionsbereichs 21 in eine Fernzone 24 und eine Nahzone 23 erreicht, wobei die Nahzone 23 einen geringeren Abstand zum Sensorsystem 30 als die Fernzone 24 aufweist. Gelangt der Benutzer 10 zunächst in die Fernzone 24, so stellt das optische Sensorsystem 30 fest, dass sich ein Objekt in der Fernzone 24 befindet. Ferner überprüft das optische Sensorsystem 30, ob das Objekt eine vorgegebene Größe aufweist. Weist das Objekt die vorgegebene Größe auf und begibt sich das Objekt in die Nahzone 23 der Detektionszone 21, so wird in der Nahzone 23 zusätzlich aus einer Messung des Abstands des Objektes zu einem optischen Sensor 50 geschlossen, ob sich das Objekt dem optischen Sensor 50 annähert. Wird dieses bejaht, so wird der Benutzer 10 erkannt und ein Signal für den Start einer Authentifizierungsüberprüfung zwischen dem ID-Geber 13 und einem Zugangskontrollsystem 14 des Kraftfahrzeuges 1 ausgelöst.

Durch das Signal wird das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2.

In den Figuren 1 und 2 ist des Weiteren der erste Betätigungsbereich 22 dargestellt. Nach einer erfolgreichen Authentifizierung überwacht das optische Sensorsystem 30 den ersten Betätigungsbereich 22. Führt nun der Benutzer 10 eine vordefinierte Bewegung in dem ersten Betätigungsbereich 22 aus und tritt beispielsweise mit einem Fuß 11 für eine gewisse Zeitdauer und innerhalb einer vordefinierten Betätigungsdauer b in den ersten Betätigungsbereich 22, so wird ein Arbeitssignal ausgelöst. Bei dem Arbeitssignal handelt es sich zum Signal der Öffnung der Heckklappe 2. Hierbei kann es nur sein, dass ein Türschloss 8 der Heckklappe 2 entriegelt wird und durch den Druck einer Dichtung leicht aufspringt. Andererseits ist es denkbar, dass zugleich eine motorische Öffnungshilfe durch das Arbeitssignal aktiviert wird, so dass die Heckklappe 2 sich vollständig öffnet.

Der Betätigungsbereich 22 ist sichtbar auf der Bodenfläche 15 ausgebildet. Hierzu ist ein erstes Anzeigeelement 43 vorgesehen, dass den Betätigungsbereich 22 für den Benutzer 10 sichtbar macht. Hierzu kann das erste Anzeigeelement 43 sichtbares Licht emittieren. Das erste Anzeigeelement 43 wird nach der erfolgreichen Authentifizierung angesteuert. Der erste Betätigungsbereich 22 liegt in den Figuren 1 und 2 innerhalb der Nahzone 23 des Detektionsbereiches 21. Der Betätigungsbereich 22 ist von geringeren räumlichen Ausmaßen als der Detektionsbereich 21.

Es kann sein, dass der erste Betätigungsbereich 22 der einzige Betätigungsbereich ist. Optional und daher in Figur 1 gestrichelt dargestellt, ist zusätzlich ein zweiter Betätigungsbereich 28 dargestellt. In diesem Fall muss ein Benutzer 10 innerhalb einer vordefinierten Betätigungsdauer b eine vordefinierte Bewegung in beiden Betätigungsbereichen 22, 28 ausführen, um das Arbeitssignal bereitzustellen. Zum Sichtbarmachen des zweiten Betätigungsbereichs 28 dient ein zweites Anzeigeelement 45 des Montagemoduls 20.

In den Figuren 3 und 4 ist ein weiteres Ausführungsbeispiel dargestellt, wie das erfindungsgemäße Montagemodul 20 eingesetzt wird. Soweit im Folgenden nicht erläutert, entsprechen Wirkungsweise und Funktion des in Figur 3 und 4 dargestellten Montagemoduls 20 der Wirkungsweise und Funktion des in den Figuren 1 und 2 dargestellten Montagemoduls 20. Das Montagemodul 20 ist in den Figuren 3 und 4 in einer B-Säule 4 einer Fahrzeugseite angeordnet. Durch den Detektionsbereich 21 wird eine Annäherung an eine Seitentür 3 des Kraftfahrzeuges 1 überwacht. Das Arbeitssignal kann zum Öffnen der Seitentür 3 dienen. Die vordefinierte Bewegung zum Bereitstellen des Arbeitssignals kann eine vordefinierte Bewegung mit einer Hand 12 des Benutzers 10 im Bereich eines Türgriffs 5 sein.

Im Gegensatz zu dem Ausführungsbeispiel der Figuren 1 und 2, befindet sich in dem in den Figuren 3 und 4 dargestellten Ausführungsbeispiel der außerhalb des Kraftfahrzeuges 1 liegende Detektionsbereich 21 vollständig über der Bodenfläche 15. Der Detektionsbereich 21 weist eine ebene Grundfläche auf. Der Betätigungsbereich 22 des Ausführungsbeispiels der Figuren 3 und 4 umfasst den Bereich des Türgriffes 5. Der einzige Betätigungsbereich 22 liegt außerhalb des Detektionsbereiches 21.

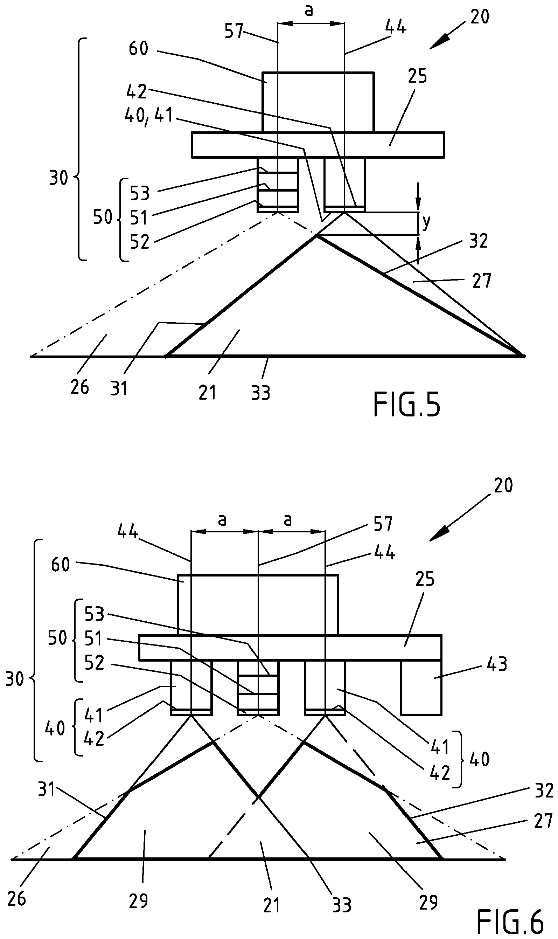

In der Figur 5 ist ein erstes Ausführungsbeispiel eines erfindungsgemäßen Montagemoduls 20 in einer Draufsicht dargestellt. Das Montagemodul 20 weist eine Installationsplatte 25 als ein Befestigungselement und ein optisches Sensorsystem 30 auf. Das optische Sensorsystem 30 weist ein Lichtmodul 40 auf, das in Figur 5 als eine einzige Lichtquelle 41 ausgebildet ist. Die Lichtquelle 41 emittiert Infrarotlicht, wodurch ein Sendebereich 27 entsteht. Form und Gestalt des Sendebereiches 27 wird durch ein Linsensystem 42 der Lichtquelle 41, das nur schematisch dargestellt ist, erreicht. Das optische Sensorsystem 30 weist zudem einen optischen Sensor 50 auf, der aus einem Empfangsbereich 26 Licht empfangen kann. Form und Gestalt des Empfangsbereiches 26 wird durch ein schematisch dargestelltes Linsensystem 51 des optischen Sensors 50 vorgegeben. Der mit dicker Strichdicke dargestellte Detektionsbereich 21 ergibt sich durch die Überlagerung des Sendebereiches 27 mit dem Detektionsbereich 26. Hierbei überdeckt der Detektionsbereich 26 den Sendebereich 27 vollständig. Der Detektionsbereich 21 beginnt mit einem Abstand y von dem optischen Sensorsystem 30. Eine Basis 33 des Detektionsbereiches 21 ergibt sich aus der nachlassenden Lichtintensität der Lichtquelle 41.

Der optische Sensor 50 weist einen Infrarotfilter 52 auf, um Licht anderer Wellenlängen zu filtern. Ferner weist der optische Sensor einen Bildsensor 53 auf, auf dem das Bild entsteht. Eine Überwachungseinheit 60 dient zur Auswertung des optischen Sensors 50. Der optische Sensor 50, das Lichtmodul 40 und die Überwachungseinheit 60 sind auf der Installationsplatte 25 befestigt.

Eine optische Achse 57 des optischen Sensors 50 und eine optische Achse 44 der Lichtquelle 41 sind in einem Abstand a = 2 cm voneinander entfernt angeordnet. Hierdurch ist eine große Überlagerung des Sendebereichs 27 mit dem Detektionsbereich 26 gegeben.

Das Montagemodul 20 der Figur 5 weist ein Anzeigenelement 43 auf. Das Montagemodul 20 der Figur 5 dient zur Überwachung des Detektionsbereichs und zum Auslösen eines Starts der Authentifizierungsüberprüfung.

Der Detektionsbereich 21 in Figur 5 ergibt sich aus der gesamten Überlagerung des Sende- und Empfangsbereichs 26, 27 und entspricht damit dem Ausführungsbeispiel der Figuren 1 und 2, bei der der Betätigungsbereich 22 sich innerhalb des Detektionsbereichs 21 befindet. Ebenfalls ist es denkbar, dass der Detektionsbereich 21 und der Betätigungsbereich jeweils nur einen Teil der Überlagerung des Sende- und Empfangsbereich 26, 27 umfasst, wie es dem Ausführungsbeispiel der Figuren 3 und 4 entspricht.

In Figur 6 ist ein zweites Ausführungsbeispiel eines erfindungsgemäßen Montagemoduls 20 dargestellt. Das zweite Ausführungsbeispiel entspricht, soweit nicht weiter ausgeführt, mit dem ersten Ausführungsbeispiel, wobei im Folgenden die Unterschiede erläutert werden.

Im zweiten Ausführungsbeispiel weist das Lichtmodul 40 zwei Lichtquellen 41 auf, die jeweils rechts und links von dem optischen Sensor 50 angeordnet sind. Jede der Lichtquellen 41 hat einen Sendebereich 29, wobei die Sendebereiche beider Lichtquellen 41 den Sendebereich 27 des Lichtmoduls 40 bilden. Der mit dicker Strichdicke dargestellte Detektionsbereich 21 ist durch eine Überlagerung des Sendebereiches 27 des gesamten Lichtmoduls 40 mit dem Empfangsbereich 26 des optischen Sensors 50 ausgebildet.

Das Montagemodul 20 weist ein Anzeigenelement 43 auf, um den Betätigungsbereich 22 sichtbar darzustellen. Das Anzeigenelement 43 ist auf der Installationsplatte 25 befestigt. Das optische Sensorsystem 30 des zweiten Ausführungsbeispiels ist geeignet, den Betätigungsbereich 22 zu überwachen und im Falle eines Erkennens eines Benutzerwillens ein Arbeitssignal bereitzustellen.

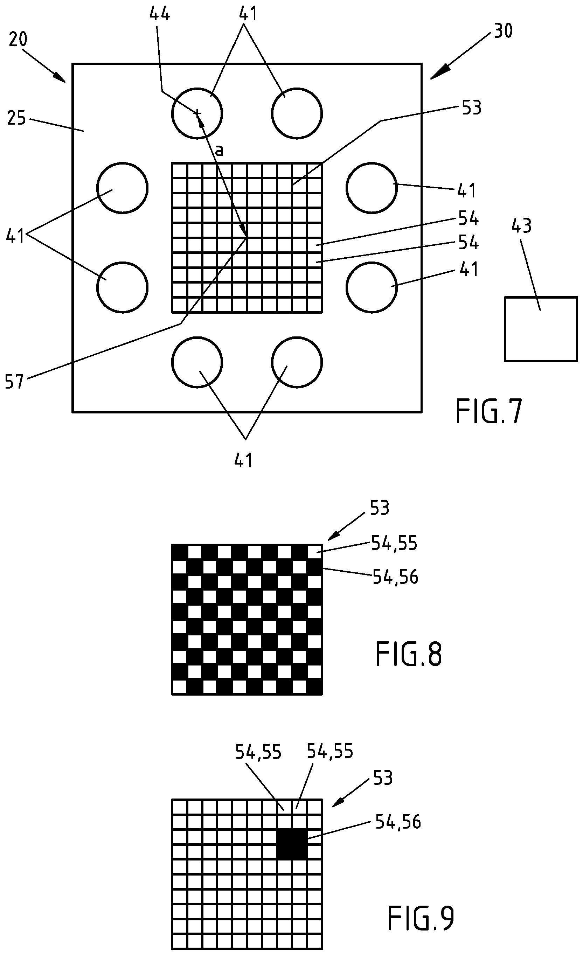

In Figur 7 ist ein drittes Ausführungsbeispiel eines erfindungsgemäßen Montagemoduls 20 in einer Vorderansicht dargestellt. Soweit im Folgenden nicht erläutert, entspricht das dritte Ausführungsbeispiel dem zweiten Ausführungsbeispiel.

In der in Figur 7 dargestellten Ansicht sind das Linsensystem 51 und der Infrarotfilter 52 aus der Ansicht entfernt worden. Hierdurch ist ein Bildsensor 53 des optischen Sensors 50 dargestellt. Der Bildsensor 53 weist eine Vielzahl von rasterförmigen Pixeln 54 auf.

Das Lichtmodul 40 des dritten Ausführungsbeispiels der Figur 7 weist eine Vielzahl von Lichtquellen 41 auf. Diese sind um den Umfang des Bildsensors 53 angeordnet. Das Montagemodul 20 weist des Weiteren ein Anzeigeelement 43 auf, das nicht auf der Installationsplatte 25 befestigt ist. Vielmehr kann das Anzeigeelement 43 an einer weiter entfernt liegenden Stelle des Kraftfahrzeuges 1 befestigt sein. Die nicht dargestellte Überwachungseinheit 60 ist zusammen mit dem Zugangskontrollsystem 14 ausgebildet.

In Figur 8 ist der Bildsensor 53 eines optischen Sensors 50 dargestellt, wobei veranschaulicht ist, wie ein in einem Ruhemodus auf dem Bildsensor 53 aufgenommenes Bild 61 des optischen Sensorsystems 30 ausgewertet wird. Wie dargestellt, wird hierbei nur jeder zweite Pixel 54 ausgewertet. Insbesondere wechseln sich nicht ausgewertete Pixel 55 und ausgewertete Pixel 56 ab, so dass sich ein karoartiges, regelmäßiges Muster bildet. In einem Arbeitsmodus hingegen wird die Gesamtzahl der Pixel 54 ausgewertet.

In Figur 9 ist der Bildsensor 53 dargestellt, wobei veranschaulicht ist, wie die aufgenommenen Bilder 61 ausgewertet werden, während das optische Sensorsystem 30 den Betätigungsbereich 22 überwacht. Nur die Pixel 54, auf denen der Betätigungsbereich 22 abgebildet ist, werden ausgewertet, sodass diese Pixel 54 den ausgewerteten Pixeln 56 entsprechen. Bei den übrigen Pixeln 54 handelt es sich um nicht ausgewertete Pixel 55.

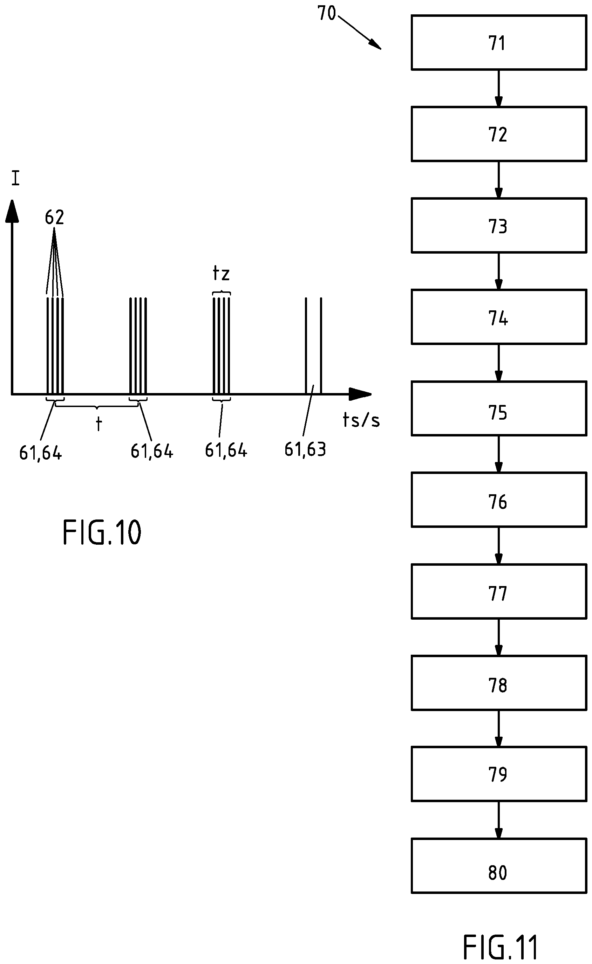

Figur 10 enthält eine Auftragung einer Lichtintensität I über der Zeit ts. Wie in Figur 10 dargestellt, wird mit Hilfe des Bildsensors 53 nach jeder Zeitspanne t ein Bild 61 aufgenommen, wobei in der Figur 10 jeweils die Zeitspanne dargestellt ist, die für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Bild 61 zu erzeugen. Die Lichtpulse 62 werden mit einer vorgegebenen Pulsfrequenz von dem Lichtmodul 40 emittiert. Hierbei kann die Pulsfrequenz während des Ruhemodus geringer sein als die des Arbeitsmodus. Ebenso kann die Bildfrequenz, die sich durch die Zeitspanne t ergibt, in einem Ruhemodus geringer sein als in einem Arbeitsmodus.

Das von dem Bildsensor 53 empfangene Licht der Lichtpulse 62 eines Bildes 61 wird aufintegriert oder aufsummiert, um das Bild 61 zu erzeugen. Um eine Abstandsmessung durchzuführen, gibt das optische Sensorsystem 30 ein Zeitintervall tz vor, in dem die Lichtpulse 62 ein Bild 61 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 53 erreichen. Hierzu emittiert das Lichtmodul 40 kein Licht.

Figur 11 zeigt ein erfindungsgemäßes Verfahren 70. In einem ersten Schritt 71 des erfindungsgemäßen Verfahrens 70 beginnt das optische Sensorsystem 30 den Detektionsbereich 21 zu überwachen. In einem zweiten Verfahrensschritt 72 entdeckt das optische Sensorsystem 20 ein Objekt, insbesondere einen Benutzer 10, in der Fernzone 24. Das optische Sensorsystem 30 überprüft in einem Verfahrensschritt 73 die Größe des Objektes in der Fernzone 24.

Hat sich das Objekt in die Nahzone 23 bewegt und hat der Verfahrensschritt 73 ergeben, dass die Größe des Objektes einer vorgegebenen Größe entspricht, so werden in Verfahrensschritt 74 anhand mehrerer Abstandsmessungen in der Nahzone 23 überprüft, ob sich der Abstand des Objekts zu dem optischen Sensor 50 verringert. Verringert sich der Abstand zum optischen Sensor 50, so wird die Überwachung des Detektionsbereichs 21 beendet und im Verfahrensschritt 75 ein Signal für den Start einer Authentifizierungsüberprüfung ausgelöst.

Nach dem Verfahrensschritt 75 kann das erfindungsgemäße Verfahren enden. Hierbei entsprechen die Verfahrensschritt 71 bis 74 dem Schritt a) und der Verfahrensschritt 75 dem Schritt b). Optional können weitere Verfahrensschritte vorgesehen sein. So kann in einem Verfahrensschritt 76 eine zuvor beschriebene Authentifizierungsüberprüfung durchgeführt werden.

Nach einer erfolgreichen Authentifizierung kann das optische Sensorsystem 30 in einem Verfahrensschritt 77 ein Signal erhalten, den Betätigungsbereich 22 während einer Betätigungsdauer b in einem Verfahrensschritt 78 zu überwachen. Wird während der Betätigungsdauer b eine vordefinierte Bewegung durchgeführt, so kann in einem Verfahrensschritt 79 der Benutzerwille im Betätigungsbereich 22 erkannt werden. Hierzu werden Abstandsmessungen im Betätigungsbereich 22 durchgeführt. In einem Verfahrensschritt 80, der dem Verfahrensschritt d) entspricht, wird hiernach ein Arbeitssignal zum Öffnen eines beweglichen Teils 2, 3 bereitgestellt. Hierbei entsprechen die Verfahrensschritte 78 und 79 dem Schritt c).

Gemäß sämtlicher Ausführungsbeispiele kann das Anzeigeelement 43 den Betätigungsbereich 22 mit sichtbarem Licht visualisieren, nachdem eine erfolgreiche Authentifizierung stattgefunden hat. Das sichtbare Licht kann zum Beispiel weißes Licht sein. Die Kontur des Betätigungsbereiches 22 kann unterschiedliche geometrische Gestalt aufweisen, wie quadratisch, rechteckig, sternförmig, punktförmig, strichförmig, oval, mit Buchstaben- und/oder Zahlenkombinationen, Symbolen, etc. Die Dimension des Betätigungsbereiches kann kleiner als 100 cm² betragen, insbesondere kleiner als 10 cm² betragen.

Bevorzugt emittiert das Anzeigeelement 43 Licht mit gleichbleibender Intensität oder Helligkeit. Das optische Sensorsystem 30 überwacht während der genannten Betätigungsdauer b den Betätigungsbereich 22. Wenn nun der Benutzer 10 eine definierte Bewegung in den Betätigungsbereich 22 ausführt, zum Beispiel seinen Fuß in den Betätigungsbereich 22 stellt, wird das sogenannte Arbeitssignal ausgelöst. Gleichzeitig und/oder im Anschluss kann das Anzeigeelement 43 den Betätigungsbereich 22 ausschalten, sodass dieser vom Benutzer 10 nicht mehr zu sehen ist. Oder es ist auch denkbar, dass nach der definierten Bewegung des Benutzers 10 in den Betätigungsbereich 22 die Lichtintensität und/oder -helligkeit des Betätigungsbereiches 22 reduziert wird. Dieses Dimmen des Betätigungsbereiches 22 kann die Aufgabe haben, dem Benutzer mitzuteilen, dass seine Bewegung in dem Betätigungsbereich 22 erkannt wurde. Während des Zeitraumes des Dimmens hat sich der Benutzer 10 aus dem Betätigungsbereich 22 zu entfernen.

Zum Beispiel ist es gemäß sämtlicher Ausführungsbeispiele denkbar, dass die Bewegung in den Betätigungsbereich 22 über eine Bewegung eines Fußes des Benutzers in den Betätigungsbereich (22) zu realisieren ist, "step-in". Während des Zeitraumes des Dimmens ist der Fuß aus dem Betätigungsbereich 22 herauszunehmen, "step-out".

Der Zeitraum des Dimmens oder die Dimmdauer ist vorteilhafterweise einstellbar, bevorzugt ist die Dimmdauer maximal 10 Sekunden, insbesondere 5 Sekunden und bevorzugt ungefähr 3 Sekunden.

Die Dimmintensität kann zum Beispiel gelichmäßig erfolgen, insbesondere kann eine Rampenfunktion und/oder kann sprunghafte Schritte aufweisen.

Es hat sich gezeigt, dass ein geringer Stromverbrauch sowie eine geringe Wärmeentwicklung zu verzeichnen ist, wenn der Betätigungsbereich 22 durch das Anzeigeelement 43 gedimmt wird.

### Bezugszeichenliste

- 1: Kraftfahrzeug
- 2: Heckklappe (bewegliches Teil)
- 3: Seitentür (bewegliches Teil)
- 4: B-Säule
- 5: Türgriff
- 8: Türschloss

- 10: Benutzer
- 11: Fuß
- 12: Hand
- 13: ID-Geber
- 14: Zugangskontrollsystem
- 15: Bodenfläche
- 16: Authentifizierungssystem

- 20: Montagemodul
- 21: Detektionsbereich
- 22: erster Betätigungsbereich
- 23: Nahzone
- 24: Fernzone
- 25: Befestigungselement
- 26: Empfangsbereich
- 27: Sendebereich von 40
- 28: zweiter Betätigungsbereich
- 29: Sendebereich von 41

- 30: Optisches Sensorsystem
- 31: Schenkel
- 32: Schenkel
- 33: Basis
- 40: Lichtmodul
- 41: Lichtquelle von 30
- 42: Linsensystem für 30
- 43: erstes Anzeigeelement
- 44: optische Achse von 41
- 45: zweites Anzeigeelement

- 50: optischer Sensor
- 51: Linsensystem von 50
- 52: IR-Filter
- 53: Bildsensor
- 54: Pixel
- 55: nicht ausgewertete Pixel
- 56: ausgewertete Pixel
- 57: optische Achse von 50

- 60: Überwachungseinheit
- 61: Bild
- 62: Lichtpuls
- 63: Vergleichsbild
- 64: Erkennungsbild

- 70: Verfahren
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Verfahrensschritt
- 78: Verfahrensschritt
- 79: Verfahrensschritt
- 80: Verfahrensschritt

- α: Winkel von 21
- β: Winkel von 21
- L: Länge von 21
- x: max. Entfernung von 21 zu 30
- y: minimaler Abstand von 21 zu 30
- a: Abstand von 44 zu 57

## Patentansprüche

1. Montagemodul (20) für ein Kraftfahrzeug, mit einem optischen Sensorsystem (30), das geeignet ist,
a) einen außerhalb des Kraftfahrzeugs (1) liegenden Detektionsbereich (21) zu überwachen, um eine Nähe eines Benutzers (10) festzustellen,
b) im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen.

2. Montagemodul (20) nach Anspruch 1,
**dadurch gekennzeichnet,**
**dass** das Montagemodul (20) dazu ausgebildet ist, so eingebaut zu werden, dass sich der Detektionsbereich (21) zumindest teilweise oberhalb einer Bodenfläche (15), auf der das Kraftfahrzeug (1) steht, befindet und/oder
**dass** das optische Sensorsystem (30) einen optischen Sensor (50) aufweist, um Licht aus dem Detektionsbereich (21) zu empfangen, und das optische Sensorsystem (30) ein Lichtmodul (40) mit mindestens einer Lichtquelle (41) zum Emittieren von Licht aufweist, wobei insbesondere der Detektionsbereich (21) für den Benutzer (10) nicht sichtbar ist.

3. Montagemodul (20) nach einem der vorhergehenden Ansprüche,
**dadurch gekennzeichnet,**
**dass** das optische Sensorsystem (30) eine Überwachungseinheit (60) aufweist, die dazu ausgebildet ist, Bilder (61) auszuwerten, die vom optischen Sensor (50) aufgenommen worden sind und/oder dass das optische Sensorsystem (30) dazu ausgebildet ist, den Detektionsbereich (21) bei einem abgestellten Kraftfahrzeug (1) vom Abstellen des Kraftfahrzeuges (1) bis zu einer erfolgreichen Authentifizierung zu überwachen.

4. Montagemodul (20) nach einem der vorhergehenden Ansprüche,
**dadurch gekennzeichnet,**
**dass** ein Benutzer (10) im Detektionsbereich (21) nur erkannt wird, wenn sich ein Objekt über eine vorgegebene Zeitdauer im Detektionsbereich (21) aufhält und/oder wenn sich ein Objekt einer vorgegebenen Größe im Detektionsbereich (21) aufhält.

5. Montagemodul (20) nach einem der vorhergehenden Ansprüche,
**dadurch gekennzeichnet,**
**dass** das optische Sensorsystem (30) geeignet ist,
c) nach erfolgreicher Authentifizierung einen außerhalb des Kraftfahrzeuges (1) liegenden, sich vom Detektionsbereich (21) unterscheidenden Betätigungsbereich (22) zu überwachen,
d) im Falle eines Erkennens eines Benutzerwillen im Betätigungsbereich (22) ein Arbeitssignal für das Kraftfahrzeug (1), insbesondere ein Signal zum Öffnen und/oder Schließen eines beweglichen Teils (2,3), bereitzustellen.

6. Montagemodul (20) nach einem der vorhergehenden Ansprüche,
**dadurch gekennzeichnet,**
**dass** der Betätigungsbereich (22) für den Benutzer (10) sichtbar ist, wobei das Montagemodul (20) ein Anzeigeelement (43) aufweist, durch das sichtbares Licht emittierbar ist, um den Betätigungsbereich (22) für den Benutzer (10) sichtbar zu machen.

7. Montagemodul (20) nach einem der vorhergehenden Ansprüche,
**dadurch gekennzeichnet,**
**dass** zur Erkennung des Benutzerwillens eine vordefinierte Bewegung innerhalb einer Betätigungsdauer b erfolgen muss, wobei insbesondere es sich bei der vordefinierten Bewegung um eine Bewegung eines Körperteils (11,12) des Benutzers (10) im oder am Betätigungsbereich (22) und/oder eine Bewegung des Körperteils (11, 12) in den Betätigungsbereich und/oder aus dem Betätigungsbereich handelt.

8. Montagemodul (20) nach einem der vorhergehenden Ansprüche,
**dadurch gekennzeichnet,**
**dass** in einer Draufsicht der Detektionsbereich (21) eine größere räumliche Ausdehnung als der Betätigungsbereich (22) aufweist, wobei insbesondere in einer Draufsicht sich der Betätigungsbereich (22) innerhalb des Detektionsbereichs (21) befindet.

9. Montagemodul (20) nach einem der vorhergehenden Ansprüche,
**dadurch gekennzeichnet,**
**dass** der optische Sensor (50) und/oder das Lichtmodul (40) dazu ausgebildet sind, sowohl zur Überwachung des Detektionsbereichs (21) als auch zum Überwachen des Betätigungsbereichs (22) eingesetzt zu werden.

10. Montagemodul (20) nach einem der vorhergehenden Ansprüche,
**dadurch gekennzeichnet,**
**dass** das Anzeigeelement (43) derart ausgeführt ist, dass das Anzeigeelement (43) zumindest in einen ersten und einen zweiten Betriebsmodus schaltbar ist, wobei nach einer erfolgreichen Authentifizierung das Anzeigeelement (43) in dem ersten Betriebsmodus den Betätigungsbereich (22) mit einer nahezu konstanten Helligkeit visualisiert, und
nach einer Erkennung eines Benutzerwillens im Betätigungsbereich (22) durch das Sensorsystem (30) das Anzeigeelement (43) in den zweiten Betriebsmodus fährt, in dem die Helligkeit des Betätigungsbereiches (22) reduziert wird, insbesondere die Helligkeit auf 0% reduziert wird.

11. Montagemodul (20) nach einem der vorhergehenden Ansprüche,
**dadurch gekennzeichnet,**
**dass** das Anzeigeelement (43) im Sensorsystem (30) integriert ist.

12. Authentifizierungssystem (16) mit einem Zugangskontrollsystem (14), einem ID-Geber (13) und einem Montagemodul (20) nach einem der vorhergehenden Ansprüche.

13. Verfahren (70), das insbesondere mit einem Montagemodul (20) nach einem der Ansprüche 1 bis 13 ausführbar ist, zum Auslösen mindestens eines Signals für ein Kraftfahrzeug (1) mit folgenden Schritten:
a) Überwachung einen außerhalb des Kraftfahrzeugs (1) liegenden Detektionsbereich (21) durch ein optisches Sensorsystem (30), um eine Nähe eines Benutzers (10) festzustellen,
b) Auslösen eines Signals für den Start einer Authentifizierungsüberprüfung zwischen einem ID-Geber (13) und einem Zugangskontrollsystem (14) des Kraftfahrzeuges (1) im Falle eines Erkennens des Benutzers (10) im Detektionsbereich (21),
c) wobei das Sensorsystem (30) nach erfolgreicher Authentifizierung einen außerhalb des Kraftfahrzeuges (1) liegenden, sich vom Detektionsbereich (21) unterscheidenden Betätigungsbereich (22) überwacht,
d) im Falle eines Erkennens eines Benutzerwillens im Betätigungsbereich (22) ein Arbeitssignal für das Kraftfahrzeug (1), insbesondere ein Signal zum Öffnen und/oder Schließen eines beweglichen Teils (2,3), bereitstellt,
e) der Betätigungsbereich (22) durch ein Anzeigeelement (43) visualisiert wird, wobei das Anzeigeelement (43) in einen ersten Betriebsmodus geschaltet wird, wenn eine erfolgreiche Authentifizierung vorliegt,
wobei, wenn das Sensorsystem (30) den Benutzerwillen im Betätigungsbereich (22) erkennt, das Anzeigeelement (43) in den zweiten Betriebsmodus geschaltet wird, bei dem die Helligkeit des Betätigungsbereiches (22) unterschiedlich zur Helligkeit des Betätigungsbereiches (22) des ersten Betriebsmodus ist.

14. Verfahren (70) nach Anspruch 13,
**dadurch gekennzeichnet,**
**dass** die Helligkeit des Betätigungsbereiches (22) im ersten Betriebsmodus konstant ist und/oder die Helligkeit des Betätigungsbereiches (22) im zweiten Betriebsmodus gedimmt wird, insbesondere auf 0% Helligkeit gedimmt wird.

15. Verfahren (70) nach Anspruch 13 oder 14,
**dadurch gekennzeichnet,**
**dass** während des ersten und/oder des zweiten Betriebsmodus das Sensorsystem (30) den Betätigungsbereich (22) überwacht und/oder
**dass**, erst wenn während des zweiten Betriebsmodus der Benutzer (10) aus dem Betätigungsbereich (22) sich entfernt, das Arbeitssignal ausgelöst wird.
